(19) Europäisches Patentamt
European Patent Office
Office européen des brevets

(11) EP 4 135 527 B1

(12) **EUROPEAN PATENT SPECIFICATION**

(45) Date of publication and mention of the grant of the patent:
**04.06.2025 Bulletin 2025/23**

(21) Application number: **21789594.5**

(22) Date of filing: **12.04.2021**

(51) International Patent Classification (IPC):
***A23C 11/06*** (2025.01) ***A23C 11/10*** (2025.01)
***A23J 3/14*** (2006.01) ***A23L 2/66*** (2006.01)
***A23L 33/185*** (2016.01) ***A23C 9/13*** (2006.01)
***A23L 9/10*** (2016.01) ***A23C 9/133*** (2006.01)
***A23L 11/50*** (2021.01) ***A23L 11/60*** (2025.01)
***A23L 11/65*** (2025.01)

(52) Cooperative Patent Classification (CPC):
**A23L 11/60; A23C 9/1315; A23C 9/133; A23C 11/06; A23C 11/10; A23C 11/106; A23J 3/14; A23L 2/66; A23L 9/12; A23L 11/50; A23L 11/65; A23L 33/185**

(86) International application number:
**PCT/IL2021/050414**

(87) International publication number:
**WO 2021/209985 (21.10.2021 Gazette 2021/42)**

(54) **PROCESS FOR THE MANUFACTURING OF FERMENTED DAIRY PRODUCT SUBSTITUTES**
VERFAHREN ZUR HERSTELLUNG VON FERMENTIERTEN MILCHPRODUKTERSATZSTOFFEN
PROCÉDÉ DE FABRICATION DE SUBSTITUT DE PRODUIT LAITIER FERMENTÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.04.2020 US 202063009081 P**

(43) Date of publication of application:
**22.02.2023 Bulletin 2023/08**

(73) Proprietor: **Technion Research & Development Foundation Ltd.**
**3200004 Haifa (IL)**

(72) Inventors:
- **SHPIGELMAN, Avi**
  **3200004 Haifa (IL)**
- **LEVY, Rachel**
  **3200004 Haifa (IL)**
- **OKUN, Zoya**
  **3200004 Haifa (IL)**

(74) Representative: **ABG Intellectual Property Law, S.L.**
**Avenida de Burgos, 16D**
**Edificio Euromor**
**28036 Madrid (ES)**

(56) References cited:
**WO-A1-2018/075589 WO-A1-2018/075589**
**CN-A- 108 967 550 CN-A- 108 967 550**

- **JESKE STEPHANIE ET AL: "Formation, stability, and sensory characteristics of a lentil-based milk substitute as affected by homogenisation and pasteurisation", EUROPEAN FOOD RESEARCH AND TECHNOLOGY, SPRINGER BERLIN HEIDELBERG, BERLIN/HEIDELBERG, vol. 245, no. 7, 8 May 2019 (2019-05-08), pages 1519 - 1531, XP036816049, ISSN: 1438-2377, [retrieved on 20190508], DOI: 10.1007/ S00217-019-03286-0**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- STEPHANIE BADER ET AL: "Can protein functionalities be enhanced by high-pressure homogenization? - A study on functional properties of lupin proteins", PROCEDIA FOOD SCIENCE, vol. 1, 28 December 2011 (2011-12-28), NL, pages 1359 - 1366, XP055688382, ISSN: 2211-601X, DOI: 10.1016/j.profoo.2011.09.201
- SARICAOGLU FURKAN TURKER ED - ADALI TERIN: "Application of high-pressure homogenization (HPH) to modify functional, structural and rheological properties of lentil (Lens culinaris) proteins", INTERNATIONAL JOURNAL OF BIOLOGICAL MACROMOLECULES, ELSEVIER BV, NL, vol. 144, 21 November 2019 (2019-11-21), pages 760 - 769, XP086004313, ISSN: 0141-8130, [retrieved on 20191121], DOI: 10.1016/J.IJBIOMAC.2019.11.034
- HICKISCH A.; BEER R.; VOGEL R.F.; TOELSTEDE S.: "Influence of lupin-based milk alternative heat treatment and exopolysaccharide-producing lactic acid bacteria on the physical characteristics of lupin-based yogurt alternatives", FOOD RESEARCH INTERNATIONAL, ELSEVIER, AMSTERDAM, NL, vol. 84, 6 April 2016 (2016-04-06), AMSTERDAM, NL
, pages 180 - 188, XP029528665, ISSN: 0963-9969, DOI: 10.1016/j.foodres.2016.03.037
- KLOST M.; DRUSCH S.: "Structure formation and rheological properties of pea protein-based gels", FOOD HYDROCOLLOIDS, ELSEVIER BV, NL, vol. 94, 1 January 1900 (1900-01-01), NL
, pages 622 - 630, XP085676707, ISSN: 0268-005X, DOI: 10.1016/j.foodhyd.2019.03.030
- ANNA LORUSSO, ROSSANA CODA, MARCO MONTEMURRO, CARLO RIZZELLO: "Use of Selected Lactic Acid Bacteria and Quinoa Flour for Manufacturing Novel Yogurt-Like Beverages", FOODS, vol. 7, no. 4, pages 51, XP055726862, DOI: 10.3390/foods7040051
- JESKE STEPHANIE; BEZ JUERGEN; ARENDT ELKE K.; ZANNINI EMANUELE: "Formation, stability, and sensory characteristics of a lentil-based milk substitute as affected by homogenisation and pasteurisation", EUROPEAN FOOD RESEARCH AND TECHNOLOGY, SPRINGER BERLIN HEIDELBERG, BERLIN/HEIDELBERG, vol. 245, no. 7, 8 May 2019 (2019-05-08), Berlin/Heidelberg
, pages 1519 - 1531, XP036816049, ISSN: 1438-2377, DOI: 10.1007/s00217-019-03286-0
- STEPHANIE BADER, JUERGEN BEZ, PETER EISNER: "Can protein functionalities be enhanced by high-pressure homogenization? – A study on functional properties of lupin proteins", PROCEDIA FOOD SCIENCE, ELSEVIER BV, NL, vol. 1, 1 January 2011 (2011-01-01), NL
, pages 1359 - 1366, XP055688382, ISSN: 2211-601X, DOI: 10.1016/j.profoo.2011.09.201
- LEVY RACHEL; OKUN ZOYA; DAVIDOVICH-PINHAS MAYA; SHPIGELMAN AVI: "Utilization of high-pressure homogenization of potato protein isolate for the production of dairy-free yogurt-like fermented product", FOOD HYDROCOLLOIDS, ELSEVIER BV, NL, vol. 113, 27 October 2020 (2020-10-27), NL
, XP086454894, ISSN: 0268-005X, DOI: 10.1016/j.foodhyd.2020.106442

## Description

### TECHNICAL FIELD

The present invention relates to a process for the manufacturing of a fermented dairy product, e.g., yogurt or yogurt beverage, substitute, or a homogenized emulsion for the preparation thereof.

### BACKGROUND ART

Yogurt is a cultured dairy product generated by fermentation of milk inoculated with lactic acid bacteria (LAB) to form a 3D protein network. Protein content in dairy based yogurt usually range from 4-10% making it a contributing source to the daily protein consumption. In addition, yogurt is considered as a major health promoting probiotic product.

The demand for alternatives to milk-based yogurt, i.e., yogurt substitutes, is increasing due to both allergic and intolerance responses to milk components, and the rich scientific data regarding improved health for consumers of vegetarian and vegan diets. Yet, plant-based dispersions often suffer from techno-functional limitations such as poor aqueous solubility, anti-nutritional components, off-flavor, color, physical instability, etc., limiting the utilization of most plant-based sources for the development of yogurt alternatives.

Currently, there is a very limited number of industrial plant-based yogurt substitutes. Usually, they are either based on soy protein, which is a known allergen, or utilize stabilizers such as starch, gums, and carrageenan. In many cases, the protein content of existing non-dairy products is generally lower than in dairy analogues, and in some cases is minimal (e.g., in most milk-like products currently available, i.e., almond-, oat-, and even soy-based products, the protein content is near zero). CN108967550A discloses a preparation method of high-stability normal temperature stirring type sour milk, wherein a soy protein emulsion is pre-heat treated and homogenized with high pressure homogenization. Jeske at al., "Formation, stability, and sensory characteristics of a lentil-based milk substitute as affected by homogenisation and pasteurisation", 2019 discloses the effect of homogenisation pressure (180 or 900 bar) and heat treatment (65 or 85 °C) of lentil protein dispersions and lentil protein (LP) stabilised emulsion (LPE) containing none, 1.5 or 3.3% fat. Bader et al "Can protein functionalities be enhanced by high-pressure homogenization? - A study on functional properties of lupin proteins", 2011 discloses that the gel strength and the emulsifying capacities of L. albus proteins were increased significantly after high-pressure homogenization with pressures up to 150 MPa at 35 and 60°C. WO2018/075589A1 discloses that subjecting a pea protein composition to high pressure homogenization significantly improves the solubility of the pea protein composition. Saricaoglu "Application of high-pressure homogenization (HPH) to modify functional, structural and rheological properties of lentil (Lens culinaris) proteins", 2019 discloses the effect of high-pressure homogenization (HPH) on functional, particle structure and rheological properties of lentil protein isolate (LPI) suspensions. Solubility, emulsifying and foaming properties of LPI suspensions improved significantly with increasing homogenization pressure up to 100 MPa.

### SUMMARY OF INVENTION

In one aspect, the present invention relates to a process for the manufacturing of a homogenized emulsion for the preparation of a fermented dairy product-substitute, said process comprising:(i) providing a soluble- or partially soluble-plant protein concentrate/isolate in a dried form, wherein said plant protein concentrate/isolate is a potato protein concentrate/isolate, pea protein concentrate/isolate, lupine protein concentrate/isolate, chick pea protein concentrate/ isolate, rice protein concentrate/isolate, algae protein concentrate/isolate, lentil protein concentrate/ isolate, rapeseed protein concentrate/isolate, sunflower protein concentrate/isolate, hemp protein concentrate/isolate, sesame protein concentrate/isolate, a partial hydrolysate thereof, or a combination thereof;(ii) preparing an aqueous solution or dispersion of said plant protein concentrate/isolate; (iii) high-pressure homogenizing said solution or dispersion, at an inlet temperature of at least 5°C and such that the temperature developed during the homogenization is lower than that at which thermal aggregation of said protein concentrate/isolate in said solution or dispersion under normal pressure conditions occurs, to minimize protein sedimentation during emulsification and increase the content of said plant protein capable of emulsifying an oil;(iv) adding an oil to said high-pressure homogenized solution or dispersion, and homogenizing the mixture thus obtained to form an emulsion; and(v) high-pressure homogenizing said emulsion to prevent oil separation during fermentation or storage of said emulsion,provided that a sugar is added either to the aqueous solution or dispersion obtained in step (ii) prior to step (iii), or in addition to said oil added in step (iv).

The high-pressure homogenized emulsion obtained by the process disclosed above (herein also referred to as "***the partial process***") may be used for the preparation of a fermented dairy product substitute, starting by inoculating said emulsion with fermentative bacteria, a lactose fermenting yeast, or fungi of the genus *Saccharomyces*; and fermenting the inoculated emulsion. Particular such fermented dairy product substitutes include, e.g., sour milk-, sour cream-, yogurt-, hard or semi-hard cheese-, kefir-, butter milk-, and ice cream-substitutes. For example, the homogenized emulsion may be

used for the preparation of a yogurt- or yogurt beverage-substitute, by inoculating with lactic acid bacteria and fermenting the inoculated emulsion.

Thus, in a particular such aspect, the process disclosed above is for the manufacturing of a yogurt- or yogurt-beverage-substitute, and further comprises the steps of (vi) inoculating the high-pressure homogenized emulsion obtained in step (v) with a lactic acid bacteria; and (vii) fermenting the inoculated high-pressure homogenized emulsion to obtain said yogurt- or yogurt beverage-substitute. In other words, further disclosed herein is a process for the manufacturing of a yogurt- or yogurt beverage-substitute (herein also referred to as "***the full process***"), said process comprising:

(i) providing a soluble- or partially soluble-plant protein concentrate/isolate in a dried form; wherein said plant protein concentrate/isolate is a potato protein concentrate/isolate, pea protein concentrate/isolate, lupine protein concentrate/isolate, chick pea protein concentrate/isolate, rice protein concentrate/isolate, algae protein concentrate/isolate, lentil protein concentrate/isolate, rapeseed protein concentrate/isolate, sunflower protein concentrate/ isolate, hemp protein concentrate/isolate, sesame protein concentrate/isolate, a partial hydrolysate thereof, or a combination thereof;
(ii) preparing an aqueous (i.e., water) solution or dispersion of said plant protein concentrate/isolate;
(iii) high-pressure homogenizing said solution or dispersion, at an inlet temperature of at least 5°C and such that the temperature developed during the homogenization is lower than that at which thermal aggregation of said protein concentrate/isolate in said solution or dispersion under normal, i.e., atmospheric, pressure conditions occurs, to minimize protein sedimentation during emulsification and increase the content of said plant protein capable of emulsifying an oil;
(iv) adding an oil to said high-pressure homogenized solution or dispersion, and homogenizing the mixture thus obtained to form an emulsion;
(v) high-pressure homogenizing said emulsion (e.g., at a pressure of 50-400 MPa) to prevent oil separation during lactic acid fermentation of said emulsion;
(vi) inoculating the high-pressure homogenized emulsion obtained in step (v) with a lactic acid bacteria; and
(vii) fermenting the inoculated high-pressure homogenized emulsion to obtain said yogurt- or yogurt beverage-substitute,

provided that a sugar is added either to the aqueous solution or dispersion obtained in step (ii) prior to step (iii), or in addition to said oil added in step (iv).

In another aspect, the present invention provides a homogenized emulsion for the manufacturing of a fermented dairy product substitute, obtained by the partial process disclosed herein. Particular such emulsions are based on a potato, pea, lupine, chick pea, rice, algae, lentil, rapeseed, sunflower, hemp, or sesame protein concentrate/isolate, a partial hydrolysate thereof, or a combination thereof, wherein the concentration of said protein in said emulsion is below, equal, or higher than 3%, e.g., about 3%, 4%, 5%, 6%, 7%, 8%, 9%, or 10% (w/w); and/or the concentration of said oil in said emulsion is below, equal, or higher than 5%, e.g., about 5%, 6%, 7%, 8%, 9%, or 10% (w/w).

In a further aspect, the present invention provides a fermented dairy product substitute, obtained by, first, inoculating a homogenized emulsion as disclosed herein with fermentative bacteria, a lactose fermenting yeast, or fungi of the genus *Saccharomyces*, and fermenting the inoculated emulsion. Examples of such fermented dairy product substitutes include local and traditional sour milk-, sour cream-, yogurt-, hard or semi-hard cheese-, kefir-, butter milk-, and ice cream-substitutes.

In a particular such aspect, the invention provides a yogurt- or yogurt beverage-substitute, obtained by the full process disclosed herein. Particular such yogurt- or yogurt beverage-substitutes are based on a potato, pea, lupine, chick pea, rice, algae, lentil, rapeseed, sunflower, hemp, or sesame protein concentrate/isolate, a partial hydrolysate thereof, or a combination thereof, wherein the concentration of said protein in said yogurt- or yogurt beverage-substitute is below, equal, or higher than 3%, e.g., about 3%, 4%, 5%, 6%, 7%, 8%, 9%, or 10% (w/w); and/or the concentration of said oil in said yogurt- or yogurt beverage-substitute is below, equal, or higher than 5%, e.g., about 5%, 6%, 7%, 8%, 9%, or 10% (w/w). The yogurt- or yogurt beverage-substitutes provided may have a pH in a range of 3.7-4.5, and/or a concentration of at least $5\times10^7$-$5\times10^9$ (e.g., at least $10^8$) colony forming units of said lactic acid bacteria per gram.

The process disclosed herein enables the preparation of fermented dairy product substitutes having high-protein content. In yet another aspect, the present invention thus provides a plant protein-based dairy product substitute, e.g., a fermented plant protein-based dairy product substitute, comprising a non-soy plant protein at a concentration of about 3%, 4%, 5%, or more (w/w). Particular such products are based on a potato, pea, lupine, chick pea, rice, algae, lentil, rapeseed, sunflower, hemp, or sesame protein concentrate/isolate, a partial hydrolysate thereof, or a combination thereof, wherein the concentration of said protein in said dairy product substitute is about 3% or more, e.g., about 3%, 4%, 5%, 6%, 7%, 8%, 9%, or 10% (w/w); and/or the concentration of oil in said dairy product substitute is below, equal, or higher than 5%, e.g., about 5%, 6%, 7%, 8%, 9%, or 10% (w/w). More particular such dairy product substitutes, either fermented or not, are

yogurt- or yogurt beverage-substitutes, e.g., potato protein-based yogurt- or yogurt beverage-substitutes.

## BRIEF DESCRIPTION OF DRAWINGS

**Fig. 1** shows a representative SDS-PAGE of potato protein isolate (PPI) solution (1% w/w) in DW (M indicates the molecular weight marker).

**Figs. 2A-2C** show (**2A**) protein solubility (%) of 5% PPI in DW, either treated or not with a pre-processing step at 200 MPa and $T_{in}$=15°C. Error bars represent standard error and the difference in the small letter above bars represents the statistical difference between PPI solutions (*p*<0.05, *n*=6). **(2B-2C):** Images of PPI emulsion after (U)HPH treatment, without (**2B**) and with (**2C**) a pre-processing step, wherein (1) 0.1 MPa; (2) 30 MPa; (3) 75 MPa; (4) 120 MPa; and (5) 200 MPa.

**Figs. 3A-3B** show (**3A**) particle size distribution of PPI emulsions at different homogenization pressures (0.1, 30, 75, 120, and 200 MPa) by light scattering: with a pre-processing step at 200 MPa (dashed lines, right panel); without a pre-processing step at 200 MPa (solid lines, left panel). (**3B**) The influence of (U)HPH pressure on lightness (L* coordinate of PPI emulsion at different homogenization pressures (0.1 MPa, 30-200 MPa) and milk. Error bars represent standard error (n=2). Differences in the small letter above bars represent statistical difference between PPI emulsion homogenized at different pressures, while differences in the capital letter above bars represent statistically significant differences between PPI emulsion homogenized at 30 and 200 MPa to milk (*p*<0.05, *n*=2).

**Figs. 4A-4B** show the influence of (U)HPH pressure on stability against separation in accelerated storage conditions: (**4A**) creaming velocity of PPI emulsions and milk; (**4B**) PPI emulsion cuvettes after the analysis; (1) 0.1 MPa; (2) 30 MPa; (3) 75 MPa; (4) 120 MPa; (5) 200 MPa. Error bars represent standard error (*n*=2). Difference in the small letter above the bar represents the statistical difference between PPI emulsion homogenized at different pressures, while differences in the capital letter above bars represent statistically significant differences between PPI emulsion homogenized at 30 and 200 MPa to milk (*p*<0.05, *n*=2).

**Figs. 5A-5B** show (**5A**) pH curves during fermentation at 37°C for 16 h of 200 MPa PPI yogurt-like structure and milk yogurt; and (**5B**) cell numbers (log (CFU/ml)) of LAB during fermentation of PPI emulsion, homogenized at different pressures, and milk for 16 at 37°C. Error bars represent standard error (*n*=2).

**Fig. 6** shows a typical storage modulus curve as a function of the angular frequency of PPI gels homogenized at different pressures and milk yogurts. The results are representatives of three replicates.

**Figs. 7A-7B** show (**7A**) a typical analytical centrifugation, and the time and space-resolved transmission extinction profiles and cuvettes after the analysis of PPI and milk gels, after inoculating with LAB for 16 h at 37°C: 0.1 MPa (upper left); 30 MPa (mid left); 75 MPa (lower left); 120 MPa (upper right); 200 MPa (mid right); and milk (lower right); and (**7B**) % separation of PPI gels in the cuvettes after the analysis, presented as the relative height of the separation divided by the initial sample height in the cuvettes. Error bars represent standard error (n=2). Difference in letters above bars represents the statistical difference between PPI gels homogenized at different pressures (p<0.05).

**Figs. 8A-8C** show (**8A**) the influence of (U)HPH pressure: L* coordinate (lightness value) of PPI gels at different homogenization pressures and milk. (**8B**-**8C**): Images of PPI gels after (U)HPH treatment: PPI gels without (**8B**) and with (**8C**) a pre-processing step: (1) 0.1 MPa; (2) 30 MPa; (3) 75 MPa; (4) 120 MPa; (5) 200 MPa; (6) milk. Error bars represent standard error (*n*=2). Difference in the small letter above bars represents the statistical difference between PPI gels homogenized at different pressures, while difference in the capital letter above bars represents statistically significant differences between PPI gels homogenized at 30 and 200 MPa to milk (*p*<0.05, *n*=2).

**Figs. 9A-9C** show texture analysis data of PPI yogurt substitutes at different pressure and milk yogurt. (**9A**) hardness; (**9B**) adhesiveness; and (**9C**) cohesiveness. Difference in the small letter above bars represents the statistical difference between PPI gels homogenized at different pressures, while difference in the capital letter above bars represents statistically significant differences between PPI gels homogenized at 30 and 200 MPa to milk (*p*<0.05, *n*=2).

**Fig. 10** shows water holding capacity of PPI yogurt substitutes homogenized at different pressures, and milk yogurt. Error bars represent standard error (*n*=2). Difference in the small letter above bars represents the statistical difference between PPI gels homogenized at different pressures, while difference in the capital letter above bars represents statistically significant differences between PPI gels homogenized at 30 and 200 MPa to milk (*p*<0.05, *n*=2).

**Figs. 11A-11B** show (**11A**) the average particle size distribution of emulsions containing 5% PPI and 1.5% (left panel), 3% (middle panel), or 10% (right panel) canola oil, at different homogenization pressures (solid lines - 0.1 MPa; dots - 30 MPa; dashed lines - 200 MPa). (**11B**) The influence of HPH pressure on whiteness index of PPI emulsions at different homogenization pressures (0.1 MPa, 30 MPa, and 200 MPa). Error bars represent standard error (n=2). Differences in the small letter represent the statistical difference between PPI emulsions at the same oil concentration.

**Figs. 12A-12B** show the pressure level effect on the stability against separation under accelerated conditions: (**12A**)

Creaming velocity of PPI emulsions with different oil content; (**12B**) Visual image of PPI emulsion cuvettes after the analysis (left, middle and right panels represent 1.5%, 3% and 10% canola oil, respectively); Error bars represent standard error (n=2). The difference in the small letter above the bar represents the significant difference between PPI emulsion homogenized at different pressures at the same oil concentration ($p$<0.05, n=2).

**Figs. 13A-13D** show the average storage curve as a function of the angular frequency of PPI yogurt alternatives with different oil content, homogenized at different pressures: (**13A**) 1.5%; (**13B**) 3%; and (**13C**) 10%; and the whiteness index of PPI gels with different oil content, homogenized at different pressures (**13D**).

**Fig. 14** shows the visual image of yogurt alternative from PPI with 10% oil.

**Fig. 15** shows the effect of a pre-processing step at 200 MPa and $T_{in}$=15°C on the physical stability against separation of five different commercially available pea PI suspensions (5%), identified herein as Peal, C9, B9, 85D, and 85F, during time (1h, 24h). (-) without a pre-processing step; (+) with the pre-processing step.

**Figs. 16A-16B** show the effect of HPH pre-processing step (200 MPa, $T_{in}$=15°C) on pea protein suspensions: (**16A**) Average PSD of five different pea protein isolates (5%); (**16B**) after centrifugal separation: (-) without a pre-processing step; and (+) with the pre-processing step.

**Fig. 17** shows the effect of HPH pre-processing step (200 MPa, $T_{in}$=15°C) on the zeta potential: (-) without a pre-processing step in 10mM phosphate buffer pH=7; and (+) with the pre-processing step. Error bars represent standard error (n=2). Differences in the small letter represent the statistical difference after the HPH pre-processing treatment ($p$<0.05, n=2).

## DETAILED DESCRIPTION

Plant based proteins are usually physically unstable, i.e., sediment with time. Some industrially developed proteins concentrates/isolates such as potato protein isolates show better stability; yet they still do not show full solubility and stability at high concentrations. In addition, their color is usually grey and non-attractive. The fermentation required to produce yogurt is time consuming (~6 hours or more). If during this time the instability phenomena governs, the oil phase will separate and/or particles will sediment. Otherwise, if sufficient stability is provided to allow the yogurt matrix to form by the microorganisms, the gel matrix itself will provide further support against phase separation.

(Ultra) high-pressure homogenization ((U)HPH) is a non-thermal continuous technology that may provide, in a single process, the advantages of both homogenization and pasteurization, retain microbial safety, form and stabilize emulsions, and directly and indirectly improve some nutritional aspects of processed liquid foods during shelf life. (U)HPH allows reaching homogenization at pressures of up to 400 megapascal (MPa), wherein pressures below 200 MPa are considered HPH, and pressures of 200 MPa or above are considered UHPH. During (U)HPH processing, a linear temperature increase ranging from 16.6-19.5°C per 100 MPa occurs with the increase in pressure. In addition to the effects of (U)HPH on the homogenized solution, the structural changes in the emulsion can also result in a modification of the fermented product obtained downstream in the process. For example, homogenization of milk at 75 MPa prior to inoculation was reported to increase the viscosity index and gel firmness of bovine milk yogurt due to changes in the binding between the denatured whey proteins with water and fat globules, and changes between casein-casein and casein-fat interactions (Massoud *et al.,* 2016). Functional properties of proteins, such as solubility, gelation, emulsification, foaming binding, coagulation, and water holding capacity, can be affected by (U)HPH. During (U)HPH, protein molecules experience not only high pressure but also the combined force-induced phenomena of cavitation, shear, turbulence, and temperature rise simultaneously over a short period of time (Bouaouina *et al.*, 2006). A former study reported that (U)HPH, up to 300 MPa, improved the foaming properties of whey proteins as a result of the dissociation of large aggregates, and the foaming capacity of bovine serum albumin due to protein conformational changes. Another study, which examined the effect of (U)HPH on soybean globulins, reported that the treatment led to unfolding and aggregation and suggested that there might be an optimal treatment pressure around 150-200 MPa for which emulsifying properties of the proteins are enhanced (Bouaouina *et al.,* 2006). To the best of our knowledge, few studies examined the utilization and the influence of (U)HPH on the production of yogurt substitutes from different plant-based sources such as oat, soy, coconut, cashew, almond, hemp, lupine, pea, and quinoa (Brückner-Gühmann *et al.,* 2019; Cruz *et al.,* 2009; Ferragut *et al.,* 2009; Grasso *et al.,* 2020; Grobben et al., 1997; Hickisch *et al.,* 2016; Klost and Drusch, 2019; Lorusso *et al.,* 2018; Mårtensson *et al.,* 2000; Zannini *et al.*, 2018), but none of them studied the utilization and influence of (U)HPH on yogurt substitutes made from novel plant-based protein isolates in general, and potato protein isolates in particular.

The utilization of high-pressure homogenization (HPH) together with plant proteins isolates/concentrates allows to provide a sufficiently stable emulsion for the formation of plant-based yogurts. In addition, both the emulsification and the fermentation processes provide a "whiter" color more similar to the color of regular dairy-based yogurt.

In the studies described herein, HPH was used to form a potato protein isolate (PPI) fermented yogurt substitute by lactic acid bacteria fermentation, while examining the influence of this treatment on both the PPI emulsions' and gels' characteristics and physical properties. As found, the HPH strongly affected the particle size distribution (PSD) of the emulsion, and surprisingly, by subjecting the PPI solution to a pre-processing HPH step an improved PPI solubility was

achieved. The increase in homogenization pressure resulted in a reduction in the particle size, and the formation of finer and whiter emulsion with minimal sedimentation; and improved the physical stability against separation. As a direct result, the formed emulsions and gels showed more physical stability against phase separation. The PPI yogurt substitutes were received at the same time frame as milk yogurt; and had a gel-like behavior indicating that at all the examined pressures, the storage modulus (G') was higher than the loss modulus (G"), and a lightness value similar to those reported for commercially available plant-based yogurt substitutes. HPH can therefore be used to obtain plant-based, e.g., PPI-based, yogurt- and yogurt beverage- substitutes with improved physical properties.

High-pressure homogenized emulsions based on pea protein isolates were prepared as well and showed physical properties similar to those of the PPI-based emulsions.

In one aspect, the present invention thus relates to a process for the manufacturing of a fermented dairy product substitute, or a homogenized emulsion for the preparation thereof by fermentation, said process comprising:

(i) providing a soluble- or partially soluble-plant protein concentrate/isolate in a dried form; wherein said plant protein concentrate/isolate is a potato protein concentrate/isolate, pea protein concentrate/isolate, lupine protein concentrate/isolate, chick pea protein concentrate/isolate, rice protein concentrate/isolate, algae protein concentrate/isolate, lentil protein concentrate/isolate, rapeseed protein concentrate/isolate, sunflower protein concentrate/ isolate, hemp protein concentrate/isolate, sesame protein concentrate/isolate, a partial hydrolysate thereof, or a combination thereof;
(ii) preparing an aqueous solution or dispersion of said plant protein concentrate/isolate;
(iii) high-pressure homogenizing said solution or dispersion, at an inlet temperature of at least 5°C and such that the temperature developed during the homogenization is lower than that at which thermal aggregation of said protein concentrate/isolate in said solution or dispersion under normal, i.e., atmospheric, pressure conditions occurs, to minimize protein sedimentation during emulsification and increase the content of said plant protein capable of emulsifying an oil;
(iv) adding an oil to said high-pressure homogenized solution or dispersion, and homogenizing the mixture thus obtained to form an emulsion; and
(v) high-pressure homogenizing said emulsion to prevent oil separation during fermentation or storage of said emulsion,

provided that a sugar is added either to the aqueous solution or dispersion obtained in step (ii) prior to step (iii), or in addition to said oil added in step (iv).

The process disclosed herein requires that the plant protein concentrate/isolate utilized is water-soluble; yet it may be not fully water-soluble, i.e., partially soluble. The term "soluble- or partially soluble-plant protein concentrate/isolate" as used herein thus refers to a plant protein concentrate/isolate as defined above, which upon dissolving or dispersing in water to form a solution or dispersion containing about 3% (w/w) of said protein concentrate/isolate, and centrifuging the solution or dispersion thus obtained at about 12,000 g for about 15 min at room temperature (e.g., 25°C), not more than 40% of said protein concentrate/isolate aggregates.

Potato, *Solanum tuberosum,* is one of the broadest food crops in the world, and besides direct use as food, it is used to produce potato starch. Potato protein is extracted from the byproduct potato juice after removal of the potato starch, and generally considered as GRAS (safe food ingredients) and non-allergenic protein (U.S. FDA, 2013). Potato protein contains high levels of the essential amino acids lysine, threonine, methionine, and tryptophan (Waglay and Karboune, 2016), and was therefore suggested as nutritionally equivalent to the egg white protein, lysozyme. Yet, according to other publications, its true digestibility is slightly lower compared to that of both whey and soy proteins.

Potato proteins are often classified into three main groups: patatin, protease inhibitors, and high-molecular-weight proteins. Patatin, constituting about 40% of the soluble protein in the tuber, is a family of glycoproteins having a molecular weight of 40-45 kDa and a suggested isoelectric point at 5.25 or pH=4.9. Patatin exists in a solution as a dimer and tends to coagulate by heat. Protease inhibitors are a more heterogeneous group of proteins constituting 30-40% of the total soluble protein in the tuber, and having a molecular weight of 5-25 kDa, which tend to be more hydrophilic compared to patatin and to coagulate by heat. According to the literature, potato proteins have antimicrobial and antioxidant properties, as well as lower allergenicity compared to proteins from other sources. In addition, potato proteins were suggested to have several techno-functional properties such as emulsification, foaming, and gelation attributes, which may improve and broaden their utilization in the food industry.

The plant protein concentrate/isolate provided in step (i) is a potato protein concentrate/isolate (e.g., Solanic®200), pea protein concentrate/isolate, lupine protein concentrate/isolate, chick pea protein concentrate/isolate, rice protein concentrate/isolate, algae protein concentrate/isolate, lentil protein concentrate/isolate, rapeseed protein concentrate/isolate, sunflower protein concentrate/isolate, hemp protein concentrate/isolate, sesame protein concentrate/isolate, a partial hydrolysate thereof, or a combination thereof. In particular embodiments, the plant protein concentrate/isolate is a potato protein concentrate/isolate such as such Solanic®200 (Avebe, Veendam, the Netherlands), a pea

protein concentrate/isolate, or a partial hydrolysate thereof.

Aqueous solutions or dispersions of plant protein concentrates/isolates can be prepared by any suitable technique known in the art, e.g., by dissolving or dispersing the plant protein concentrate/isolate in water, e.g., distilled- or double distilled water.

In certain embodiments, the amount of the plant protein concentrate/isolate in the aqueous solution or dispersion prepared in step (ii) is determined such that the concentration of said plant protein in the homogenized emulsion prepared, and consequently in the dairy product substitute prepared from said homogenized emulsion, is below, equal, or higher than 3% (w/w). In particular embodiments, the amount of the plant protein concentrate/isolate in said aqueous solution or dispersion is determined such that the concentration of said plant protein in the homogenized emulsion, and consequently in the dairy product substitute, is about 3% (w/w) or more, e.g., about 3%, 4%, 5%, 6%, 7%, 8%, 9%, 10% (w/w), or more. Since the homogenized emulsion is prepared from a water solution or dispersion, the plant protein concentration in said homogenized emulsion (and in certain cases also in the dairy product substitute prepared from said emulsion, e.g., wherein the dairy product substitute is a yogurt- or yogurt beverage-substitute), when presented as weight/volume (w/v), would be similar.

In certain embodiments, the oil added in step (iv) is a vegetarian oil, i.e., oil extracted from seeds or other parts of fruits. Examples of vegetarian oils include, without being limited to, palm oil, coconut oil, canola oil, soybean oil, sunflower oil, olive oil, rapeseed oil, cottonseed oil, sesame oil, avocado oil, as well as any combination/mixture thereof. As shown herein, the utilization of HPH allowed the production of a stabilizer-free and non-allergenic PPI yogurt substitute with higher protein content, having low (1.5%), medium (3%) and high (10%) oil concentrations. Thus, in certain embodiments, the amount of the oil added to the high-pressure homogenized solution or dispersion in step (iv) is determined such that the concentration of said oil in the homogenized emulsion prepared, and consequently in the dairy product substitute prepared from said homogenized emulsion, is below, equal, or higher than 5% (w/w). In particular embodiments, the amount of oil added is determined such that the concentration of said oil in the homogenized emulsion, and consequently in the dairy product substitute, is about 5% (w/w) or more, e.g., about 5%, 6%, 7%, 8%, 9%, 10% (w/w), or more.

In certain embodiments, the sugar added during the process of the invention, either to the aqueous solution or dispersion obtained in step (ii) prior to step (iii), or in addition to the oil added in step (iv), is a carbohydrate allowing fermentation by fermentative bacteria, e.g., lactic acid fermentation by lactic acid bacteria.

The term "carbohydrate" refers to a molecule consisting of carbon, hydrogen and oxygen atoms, usually with a hydrogen-oxygen atom ratio of 2:1, which can be cyclic or linear, saturated or unsaturated, and substituted or unsubstituted. As used herein, this term particularly refers to a monosaccharide such as fructose, galactose, glucose, D-mannose, and sorbose; or a disaccharide such as sucrose, maltose, lactose, trehalose, and cellobiose. In particular embodiments, the sugar added during the process of the invention is a monosaccharide such as glucose or fructose.

In certain embodiments, the process of the invention is carried out such that the sugar is added to the aqueous solution or dispersion obtained in step (ii) prior to step (iii). In other embodiments, the sugar is added to the high-pressure homogenized solution or dispersion in step (iv), together with said oil, before forming the emulsion.

The sugar added to the process of the present invention is aimed at allowing fermentation of the high-pressure homogenized emulsion obtained in step (v) by fermentative bacteria, after inoculating said emulsion with said bacteria, e.g., lactic acid fermentation of said homogenized emulsion. The amount of sugar added during the process of the invention is thus calculated taking into consideration, at least, the volume of the homogenized emulsion prepared and the desired concentration of said fermentative (e.g., lactic acid) bacteria in the final product (e.g., yogurt- or yogurt beverage-substitute) prepared. Yet, it should be understood that the amount of sugar added might be higher than that required for a sufficient and complete fermentation process, so as to obtain a sweetened final product, e.g., a yogurt- or yogurt beverage-substitute containing a desired concentration of sugar.

Alternatively, to obtain a sweetened final product, one or more artificial sweeteners, i.e., sugar substitutes, may be added (in addition to the sugar required for the fermentation process), either to the aqueous solution or dispersion obtained in step (ii) prior to step (iii), or together with said oil in step (iv).

Similarly, the high-pressure homogenized emulsion obtained in step (v), and consequently the dairy product substitute prepared by fermentation of said emulsion, may be enriched with one or more probiotics, and/or health promoting compounds.

The term "probiotics" as used herein refers to live microorganisms, e.g., *Lactobacillus* such as *Lactobacillus acidophilus* and *Lactobacillus casei,* and *Bifidobacterium* such as *Bifidobacterium bifidum, B. longum, B. infantis,* and *B. breve,* which when administered in adequate amounts confer a health benefit on the host, generally by improving or restoring the gut flora. According to the present invention, such probiotics may be added to the high-pressure homogenized emulsion obtained in step (v) in addition to the *Lactobacillus delbrueckii* subsp. *bulgaricus* and *Streptococcus thermophiles* commonly used for yogurt production.

The term "health promoting compound" as used herein refers to a compound/component having one or more health promoting action affecting human health (Brandt *et al.*, 2004), i.e., reported to be able to either maintaining or promoting the health and wellbeing, in accordance with the WHO definition of wellbeing that goes beyond the absence of a

disease. Examples of health promoting compounds include, without limiting, prebiotic compounds, colorants, betalains, antioxidants, carotenoids, lipophilic vitamins, and polyphenols.

The term "prebiotic compound" as used herein refers to a compound capable of inducing the growth or activity of beneficial microorganisms such as bacteria and fungi, and may thus be added to food so as to alter the composition of microorganisms in the gut microbiome. Dietary prebiotics are typically non-digestible carbohydrates such as oligo- or polysaccharides, or sugar alcohols, which are not degraded or absorbed in the upper digestive tract, and stimulate the growth or activity of advantageous bacteria that colonize the large bowel by acting as substrate for them. Known prebiotics include β-glucans (β-D-glucose polysaccharides), β-fructans (polymers of fructose molecules), e.g., fructooligosaccharides and inulin, galactans (polysaccharides consisting of polymerized galactose) including galacto- oligosaccharides, soluble and insoluble fiber.

In order to enrich the high-pressure homogenized emulsion obtained in step (v) with one or more probiotic, or health promoting compounds, said probiotic(s), or health promoting compound(s) may be added during the process in parallel to said sugar and optionally said sugar substitute(s), i.e., to the aqueous solution obtained in step (ii) prior to step (iii), or together with said oil in step (iv).

In order to nutritionally enrich the high-pressure homogenized emulsion or the dairy product substitute, or to improve the techno-functional properties (like color, texture etc.,) thereof, small lipophilic or hydrophilic compounds may be added before emulsification to the oil (lipophilic) or to the protein-sugar aqueous solution (hydrophilic). Such lipophilic compounds may include, e.g., lipophilic vitamins such Vitamin E, lipophilic antioxidants such as carotenoids, lipophilic polyphenolic compounds such as flavonoids, fatty acids, extracts, etc. Examples of hydrophilic compounds include, without limiting, vitamins such as vitamins belonging to B group, hydrophilic polyphenols such as anthocyanins, betalains, and minerals.

In certain embodiments, homogenization of the plant protein concentrate/isolate-containing solution or dispersion in step (iii) is carried out under a high-ultra high pressure in the range of about 50 MPa to about 400 MPa, e.g., under a pressure of about 50, 75, 100, 125, 150, 175, 200, 225, 250, 275, 300, 325, 350, 275, or 400 MPa. Alternatively, and as found in accordance with the present invention, the pressure utilized in this step may be lower than 50 MPa, e.g., about 15, 30 or 45 MPa, provided that more than one, e.g., 2, 3, 4 or more, cycles of homogenization under said pressure are performed.

In order to minimize protein sedimentation during emulsification of the aqueous solution or dispersion prepared in step (ii) and increase the content of the plant protein capable of emulsifying an oil, i.e., maximize the solubility and emulsification capacity of the specific plant protein concentrate/isolate used, high-pressure homogenization of said aqueous solution or dispersion is carried out in step (iii) such that the temperature developed in the solution or dispersion during the high-pressure homogenization process is lower, e.g., by about 5°C or more, than the temperature at which thermal aggregation of said protein concentrate/isolate in said solution or dispersion, under normal pressure, i.e., atmospheric, conditions occurs. In this respect, it should be noted that the temperature developed in the solution or dispersion during the high-pressure homogenization process depends on both the inlet temperature, i.e., the temperature of the solution or dispersion entering the process, and the pressure utilized, wherein a linear temperature increase of 16.6-19.5°C per 100 MPa occurs with the increase in pressure. For example, in case the inlet temperature is 20°C and a pressure of 200 MPa is utilized, the temperature developed during the process is approximately $20+2\times(16.6\text{-}19.5)$°C, i.e., 55.2-59°C, and such conditions will therefore be relevant only if said calculated temperature is lower than the temperature at which thermal aggregation of said protein concentrate/isolate in said solution or dispersion, when no pressure is utilized, occurs. Furthermore, it should be noted that different protein concentrates/isolates of the same plant might have different solubility and may thus require different inlet temperature and pressure conditions.

The high-pressure homogenization of the emulsion performed in step (v) is aimed at preventing oil separation (i.e., separation of the oil added in the preceding step) during fermentation, e.g., lactic acid fermentation, of the homogenized emulsion thus obtained, thereby increasing the physical stability of the dairy product substitute, e.g., yogurt- or yogurt beverage-substitute, resulting from said fermentation, or during storage of said homogenized emulsion.

In certain embodiments, homogenization of the emulsion in step (v) is carried out under a high-ultra high pressure in the range of about 50 MPa to about 400 MPa, e.g., under a pressure of about 50, 75, 100, 125, 150, 175, 200, 225, 250, 275, 300, 325, 350, 275, or 400 MPa. Alternatively, and as found in accordance with the present invention, the pressure utilized in this step may be lower than 50 MPa, e.g., about 15, 30 or 45 MPa, provided that more than one, e.g., 2, 3, 4 or more, cycles of homogenization under said pressure are performed.

In certain embodiments, the addition of oil to the high-pressure homogenized solution or dispersion (while homogenizing the mixture) to form an emulsion, and the high-pressure homogenization of said emulsion, i.e., steps (iv) and (v) of the process disclosed herein, are carried out as a single step.

The high-pressure homogenized emulsion obtained by the partial process disclosed herein, according to any one of the embodiments above, may be stored, e.g., under refrigerated or freezing conditions, and sold (optionally along with a starter culture); or may be used for the preparation of a fermented dairy product substitute, starting by inoculating said emulsion with fermentative bacteria and fermenting the inoculated emulsion. For example, the homogenized

emulsion may be used for the preparation of a yogurt- or yogurt beverage-substitute, by inoculating with lactic acid bacteria and fermenting the inoculated emulsion.

Thus, in one particular such aspect, the process of the invention is for the manufacturing of a yogurt- or yogurt-beverage-substitute, and further comprises the steps of (vi) inoculating the high-pressure homogenized emulsion with a lactic acid bacteria; and (vii) fermenting the inoculated high-pressure homogenized emulsion to obtain said yogurt- or yogurt beverage-substitute. In other words, further disclosed herein is a full process for the manufacturing of a yogurt- or yogurt beverage-substitute, which comprises:

(i) providing a soluble- or partially soluble-plant protein concentrate/isolate in a dried form; wherein said plant protein concentrate/isolate is a potato protein concentrate/isolate, pea protein concentrate/isolate, lupine protein concentrate/isolate, chick pea protein concentrate/isolate, rice protein concentrate/isolate, algae protein concentrate/isolate, lentil protein concentrate/isolate, rapeseed protein concentrate/isolate, sunflower protein concentrate/ isolate, hemp protein concentrate/isolate, sesame protein concentrate/isolate, a partial hydrolysate thereof, or a combination thereof;
(ii) preparing an aqueous solution or dispersion of said plant protein concentrate/isolate;
(iii) high-pressure homogenizing said solution or dispersion, at an inlet temperature of at least 5°C and such that the temperature developed during the homogenization is lower than that at which thermal aggregation of said protein concentrate/isolate in said solution or dispersion under normal, i.e., atmospheric, pressure conditions occurs, to minimize protein sedimentation during emulsification and increase the content of said plant protein capable of emulsifying an oil;
(iv) adding an oil to said high-pressure homogenized solution or dispersion, and homogenizing the mixture thus obtained to form an emulsion;
(v) high-pressure homogenizing said emulsion to prevent oil separation during lactic acid fermentation or storage of said emulsion;
(vi) inoculating the high-pressure homogenized emulsion with a lactic acid bacteria; and
(vii) fermenting the inoculated high-pressure homogenized emulsion to obtain said yogurt- or yogurt beverage-substitute,

provided that a sugar is added either to the aqueous solution or dispersion obtained in step (ii) prior to step (iii), or in addition to said oil added in step (iv).

As described above, yogurt- or yogurt-beverage-substitutes manufactured according to the process disclosed hereinabove may have oil concentration that is below, equal, or higher than 5% (w/w), e.g., about 5%, 6%, 7%, 8%, 9%, 10% (w/w), or more.

The term "lactic acid bacteria" (LAB) refers to an order of gram-positive, low G+C, acid-tolerant, generally nonsporulating, nonrespiring, either rod-shaped (bacilli) or spherical (cocci) bacteria that share common metabolic and physiological characteristics. These bacteria, usually found in decomposing plants and milk products, produce lactic acid as the major metabolic product of carbohydrate fermentation. The genera that comprise the LAB are at its core *Lactobacillus* such as *L. acidophilus* and *L. casei, Bifidobacterium* such as *B. bifidum, B. longum, B. infantis,* and *B. breve, Leuconostoc, Pediococcus, Lactococcus,* and *Streptococcus,* as well as the more peripheral *Aerococcus, Carnobacterium, Enterococcus, Oenococcus, Sporolactobacillus, Tetragenococcus, Vagococcus,* and *Weissella.* In a particular embodiment, the LAB used in the process disclosed herein is a mixture of *Streptococcus thermophilus* and *Lactobacillus delbrueckii* subsp. *Bulgaricus.*

In certain embodiments, the high-pressure homogenized emulsion obtained in step (v) is inoculated in step (vi) with said lactic acid bacteria to obtain a final concentration of $10^5$-$10^7$, e.g., about $10^6$ or more, colony forming units of said lactic acid bacteria per gram of said emulsion.

In certain embodiments, and in order to enrich the high-pressure homogenized emulsion obtained in step (v) with one or more probiotics and/or health promoting compounds, one or more probiotics or health promoting compounds, each as defined above, is added to the emulsion together with said lactic acid bacteria.

In certain embodiments, the inoculated high-pressure homogenized emulsion is fermented in step (vii) until a final pH in a range of 3.7-4.5, and/or a final concentration of at least $5\times10^7$-$5\times10^9$, e.g., at least $10^8$, colony forming units of said lactic acid bacteria per gram of emulsion, are obtained.

In certain embodiments, the inoculated high-pressure homogenized emulsion is fermented in step (vii) at a temperature, or temperature range, compatible with said lactic acid bacteria, i.e., optimal for the growth and reproduction of said bacteria. Yet, in other embodiments, and depending on the specific protein concentrate/isolate provided and/or features of the final product desired, said emulsion is fermented at a temperature, or temperature range, that is lower or higher, but preferably lower, than that compatible with said lactic acid bacteria. For example, in the process exemplified herein, a potato protein isolate and standard thermophilic lactic acid bacteria were used; however, the fermentation was carried out at 37°C rather than at 40-45°C that is the temperature compatible with said bacteria, because as observed, at a

temperature higher than 37°C, the thermal gelation of said isolate is faster than the gelation due to fermentation, leading to a non-typical acid formation.

In particular embodiments, disclosed herein is a full process as defined above, for the manufacturing of a yogurt- or yogurt beverage-substitute, wherein said plant protein concentrate/isolate is a potato protein concentrate/isolate, a pea protein concentrate/isolate, or a partial hydrolysate thereof; said aqueous solution or dispersion is prepared in step (ii) by dissolving or dispersing said protein concentrate/isolate in water in an amount such that the concentration of said protein in said dairy product-substitute or said homogenized emulsion is below, equal, or higher than 3% (w/w); said high-pressure homogenizing in step (iii) is carried out at an inlet temperature in a range of 10-25°C, e.g., at an inlet temperature of about 15°C and under pressure of about 75, 100, 125, 150, 175, or 200 MPa; and the vegetarian oil added in step (iv) is canola oil. In more particular such embodiments, lactic acid fermentation of the homogenized emulsion obtained, after inoculating with lactic acid bacteria, is carried out at a temperature of about 37°C.

In another particular such aspect, the process of the invention is for the manufacturing of a local or traditional sour milk-, sour cream-, yogurt-, hard or semi-hard cheese-, kefir-, butter milk-, or ice cream-substitute, or an intermediate product for the preparation thereof, and further comprises the steps of: (vi) inoculating the high-pressure homogenized emulsion with a bacteria selected from *Lactobacillus, Leuconostoc, Pediococcus, Propionibacterium, Streptococcus, Bifidobacterium,* or *Acetobacter*; a lactose fermenting yeast; or a fungi of the genus *Saccharomyces*; and (vii) fermenting the inoculated high-pressure homogenized emulsion to obtain said local or traditional sour milk-, sour cream-, yogurt-, hard or semi-hard cheese-, kefir-, butter milk-, or ice cream-substitute, or said intermediate product for the preparation thereof. In certain embodiments, the inoculated high-pressure homogenized emulsion is fermented in step (vii) at a temperature, or temperature range, compatible with, i.e., optimal for the growth and reproduction of, said bacteria, lower than that compatible with said bacteria, or higher than that compatible with said bacteria.

In certain embodiments, the product manufactured by the process disclosed hereinabove is the dairy product substitute desired, e.g., a sour milk, while in other embodiments, the product manufactured is, in fact, an intermediate product from which the desired dairy product substitute may be prepared after additional steps known in the art including, e.g., further fermentation, pasteurizing, sterilizing, mixing / blending, renneting, centrifuging, pressing, curding, ripening, drying, etc.

In another aspect, the present invention provides a homogenized emulsion for the manufacturing of a fermented dairy product substitute, obtained by the partial process disclosed herein according to any one of the embodiments above. Particular such emulsions are based on a potato, pea, lupine, chick pea, rice, algae, lentil, rapeseed, sunflower, hemp, or sesame protein concentrate/isolate, a partial hydrolysate thereof, or a combination thereof, wherein the concentration of said protein is below, equal, or higher than 3%, e.g., about 3%, 4%, 5%, 6%, 7%, 8%, 9%, 10% (w/w), or more; and/or the concentration of said oil is equal to or higher than 5% (w/w).

In a further aspect, the present invention provides a fermented dairy product substitute, obtained by, first, inoculating a homogenized emulsion as disclosed herein with fermentative bacteria, and then fermenting the inoculated emulsion.

In one particular such aspect, the present invention provides a yogurt- or yogurt beverage-substitute, obtained by the full process disclosed herein according to any one of the embodiments above. Particular such yogurt- or yogurt beverage-substitutes are based on a potato, pea, lupine, chick pea, rice, algae, lentil, rapeseed, sunflower, hemp, or sesame protein concentrate/isolate, a partial hydrolysate thereof, or a combination thereof, wherein the concentration of said protein is below, equal, or higher than 3%, e.g., about 3%, 4%, 5%, 6%, 7%, 8%, 9%, or 10% (w/w); and/or the concentration of said oil is equal to or higher than 5% (w/w). Such yogurt- or yogurt beverage-substitutes may have a pH in a range of 3.7-4.5, and/or a concentration of at least $5\times10^7$-$5\times10^9$ (e.g., at least $10^8$) colony forming units of said lactic acid bacteria per gram.

In another particular such aspect, the present invention provides a fermented dairy product substitute, obtained by, first, inoculating a homogenized emulsion as disclosed herein with a lactose fermenting yeast, or fungi of the genus *Saccharomyces*, and then fermenting the inoculated emulsion. Examples of such fermented dairy product substitutes include sour milk-, sour cream-, hard or semi-hard cheese-, kefir-, butter milk-, and ice cream-substitutes. Particular such dairy product substitutes are based on a potato, pea, lupine, chick pea, rice, algae, lentil, rapeseed, sunflower, hemp, or sesame protein concentrate/isolate, a partial hydrolysate thereof, or a combination thereof, wherein the concentration of said protein is below, equal, or higher than 3%, e.g., about 3%, 4%, 5%, 6%, 7%, 8%, 9%, or 10% (w/w); and/or the concentration of said oil is equal to or higher than 5% (w/w).

The process of the present invention, starting from a soluble- or partially soluble-plant protein concentrate/isolate in a dried form, and utilizing high-pressure homogenization of both the protein solution prior to emulsification and the emulsion formed after the addition of an oil to said high-pressure homogenized solution, enables the preparation of fermented dairy product substitutes having high-protein content.

In yet another aspect, the present invention thus provides a high non-soy protein-based dairy product substitute, i.e., a plant protein-based dairy product substitute, e.g., a fermented plant protein-based dairy product substitute, comprising a non-soy plant protein at a concentration of about 3%, 4%, 5%, or more (w/w). Particular such products

are based on a potato, pea, lupine, chick pea, rice, algae, lentil, rapeseed, sunflower, hemp, or sesame protein concentrate/isolate, a partial hydrolysate thereof, or a combination thereof, wherein the concentration of said protein in said dairy product substitute is about 3% or more, e.g., about 3%, 4%, 5%, 6%, 7%, 8%, 9%, or 10% (w/w); and/or the concentration of oil in said dairy product substitute is equal to or higher than 5% (w/w). More particular such dairy product substitutes, either fermented or not, are yogurt- or yogurt beverage-substitutes, e.g., potato protein-based yogurt- or yogurt beverage-substitutes. Particular such yogurt- or yogurt beverage-substitutes, e.g., when fermented, have a pH in a range of 3.7-4.5, and/or a concentration of at least $5\times10^7$-$5\times10^9$ (e.g., at least $10^8$) colony forming units of lactic acid bacteria per gram.

Unless otherwise indicated, all numbers expressing, e.g., protein and oil concentrations, lactic acid bacteria concentrations, pressures, and temperatures, used in this specification, are to be understood as being modified in all instances by the term "about". Accordingly, unless indicated to the contrary, the numerical parameters set forth in this specification are approximations that may vary by up to plus or minus 10% depending upon the desired properties to be obtained by the present invention.

The invention will now be illustrated by the following non-limiting Examples.

## EXAMPLES

### Study 1. (U)HPH affects emulsion and gel properties

### Materials and Methods

***Materials.*** The commercially available potato protein isolate (PPI), Solanic®200 (protein content 90.5%), was purchased from Avebe (Veendam, the Netherlands). D (+)-glucose anhydrous (purity ≥99%) was obtained from Fluka Chemie Gmbh (Buchs, Switzerland). Sunflower oil and ultra-high temperature (UHT) bovine milk were purchased from a local supermarket (Haifa, Israel). Lee's agar was purchased from Himedia Laboratories Pvt. Ltd. (Mumbai, India).

***Evaluation of PPI fractions using SDS-PAGE.*** Qualitative evaluation of the protein fractions of the commercially available PPI was conducted by sodium dodecyl sulfate-polyacrylamide gel electrophoresis (SDS-PAGE). PPI samples were diluted with sample buffer (50% glycerol, 10% SDS, 0.5M tris, 10mM EDTA, bromophenol blue, and 13% double distilled water (DDW)) and 0.5M DL-dithiothreitol (DTT). Then, the samples were heated for 10 min at 70°C and centrifuged before loading on the gel (10% acrylamide). The molecular weight of the PPI fractions was evaluated using molecular weight marker, 10kDa-250kDa (PageRuler plus pre-stained protein ladder, Thermo Scientific, Lithuania). The running conditions were based on those previously disclosed. The gels were stained with 0.25% Coomassie brilliant blue (R-250) in 50% ethanol, 10% acetic acid and 40% DDW, and then destained in 14% acetic acid [ethanol: acetic acid: DDW, 29:14:57 (v/v/v)].

***PPI emulsion preparation.*** For the pre-processing step, a solution of 5% (w/v) PPI and 5% (w/v) glucose in sterile distilled water (DW) was homogenized at 200 MPa at $T_{in}$=15°C in one cycle using a Stansted high-pressure homogenizer (model FPG 12800, Stansted Fluid Power Ltd., Essex, United Kingdom). After pretreatment, 3% (v/v) sunflower oil was added to the solution, and the emulsion was prepared in two processing steps. First, a coarse emulsion was formed using an Omni general laboratory homogenizer (OMNI International Inc., Waterbury, CT, USA) operated for 30 s at ~4,000 RPM, and the fine PPI emulsion was then produced by homogenization at a pressure range of 30-200 MPa at $T_{in}$=25°C in one cycle.

***Set type yogurt substitute preparation.*** The experimental protocol used for the preparation of a set type yogurt substitute is shown in **Scheme 1.** Bovine milk and the PPI emulsions homogenized at different homogenization pressure (0.1 MPa, 30-200 MPa) were inoculated (10 g/l) with a freeze-dried yogurt starter cultures purchased from Lyo-San Inc. (Lachute, Quebec City, Canada). This starter culture is a mixture of *Streptococcus thermophilus* and *Lactobacillus delbrueckii* subsp. *Bulgaricus* and maltodextrin. After inoculation, samples were incubated at 37°C for 16 h, and were then immediately stored at 4°C for 24 h before analysis.

***PPI solubility.*** The changes in solubility of PPI in the solution after the pre-processing step was estimated based on known methods. 10 ml of 5% (w/v) PPI solutions, with and without the pre-processing step, were centrifugated at 12,000 g for 15 min at 25°C, and the protein content was determined in both the supernatant and the original suspension of the PPI solution by the Bradford dye-binding method (Bradford, 1976; Chang and Zhang, 2017). 200μl of diluted Bradford reagent in water (HPLC grade) (1:4) was added to 800μl diluted PPI samples and the absorbance was read at 595 nm. Protein solubility was expressed as the protein content in the supernatant (soluble protein, after centrifugation) divided by the protein content in the original suspension (before centrifugation). Six different samples were measured for each protein solution.

***pH measurements during LAB fermentation.*** The pH value was measured using a pH meter (HI5221, Hanna Instrument Inc., Woonsocket, Rhode Island, USA), a calibrated pH probe designed for semi-solid materials (FC210B, Hanna Instrument Inc.), a temperature compensating probe (HI7662-W, Hanna Instrument Inc.), and HI92000 software

(Hanna Instrument Inc.). The measurements of the gels were done in duplicate.

***Particle size distribution (PSD).*** The influence of the homogenization pressure on the PSD and emulsion droplet size of PPI emulsion was measured by static light scattering measurement (Mastersizer 3000, Malvern Instruments, United Kingdom) equipped with a medium volume automated dispersion unit (Malvern Hydro MV, United Kingdom) as described before. The values of particle refractive index of PPI emulsions (based on actual measurements with analog Abbe refractometer (KRUSS, Hamburg, Germany)) and milk, and particle absorption index were 1.46, 1.4, and 0.001, respectively. The dispersant refractive index (water) was 1.330. The background and sample integration times were 20 s and 10 s. Samples were dispersed in DW at 1200 RPM until the obscuration of 6-8% was obtained. Before measuring PPI solutions not treated with the pre-processing step, those solutions were centrifuged at 2500 g for 4 min (Thermo Fisher SL 16R, Thermo Scientific, PA, USA) to separate and remove some of the non-water soluble and high molecular weight particles. All samples were done in duplicate, and each of the repetitions was measured five times.

***Lightness measurement.*** Lightness evaluation of emulsions and gels was carried out according to the CIELAB scale using a Minolta CR-300 chroma meter (Konica Minolta Sensing Americas, NJ, USA) as previously described (Grasso *et al.,* 2020) with some changes. The CIELAB scale enables to determine the L* value (100=white; 0=black), which describes the black-white component (the luminosity) and the lightness of the sample. Samples of milk and PPI emulsions and gels were measured in a 50 ml sterile plastic conical centrifuge tube with a 2.8 cm diameter covered with an aluminum foil. For milk and PPI gels, inoculated solutions were incubated at 37°C for 16 h, cooled at 4°C for 24 h, and then L* values were measured. Two different samples were measured for each emulsion and gel type.

***Stability against the separation of emulsions and gels.*** The physical stability of milk and PPI emulsions and gels (yogurts) was evaluated using an analytical centrifugal analyzer (LUMisizer, L.U.M GmbH, Berlin, Germany). This method measures the time and space resolved transmission extinction profile of the analyzed sample under analytical centrifugation and enables qualitative comparison between samples as previously suggested for emulsions, particulate systems and gels. 400 μl of milk and PPI emulsions were loaded onto rectangular polycarbonate cuvettes, and the transmission extinction profile was recorded at 2000 rpm, 20°C for 11 h. For milk and PPI gels, 400 μl of the inoculated samples were loaded onto rectangular polycarbonate cuvettes, incubated at 37°C for 16 h, cooled at 4°C for 24 h, and the transmission extinction profile was then recorded at 2000 rpm, 20°C for 13 h. All gel and emulsion samples were done in duplicate, and each of the repetitions was loaded onto the LUMisizer in duplicate. The percentage of separation of PPI gels in the cuvettes after the analysis was measured and presented as the relative height of the separation divided by the initial sample height in the cuvettes.

**Scheme 1**. Schematic representation of the preparation of a set type yogurt substitute

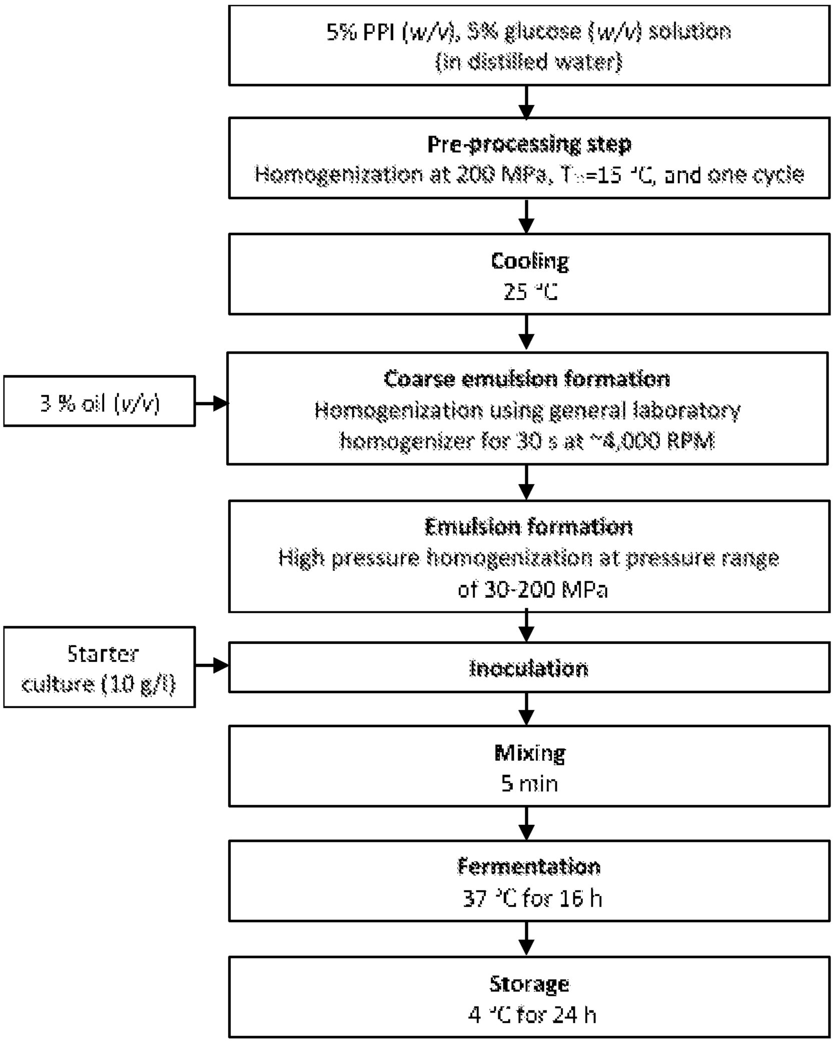


***Microbiological analysis.*** The growth of LAB in the inoculated sample, milk and PPI emulsions, at different homogenization pressure, was evaluated using Lee's agar designed for the enumeration of yogurt starter bacteria as suggested before in pour plate with double layer forming an anaerobic condition. All samples were tested at 0, 3, 6, and 16 h of fermentation. Until seeding, samples were stored at 4°C. For determining colony-forming units (CFU), samples were serially diluted by 0.1% (w/v) peptone solution. Petri dishes were incubated at 30°C for 24 h. All samples were done in duplicate.

***Texture profile analysis (TPA).*** Texture profile analysis was performed based on accepted practices. 30 ml of inoculated milk and PPI emulsions were loaded onto a 50 ml sterile conical plastic centrifuge tube with a 2.8 cm diameter. After incubation at 37°C for 16 h, the samples were kept at 4°C for 24 h before the analysis. The mechanical properties were measured by textile profile analysis using a TA1 texture analyzer (Lloyd Instruments Ltd., AMETEK, Berwyn, PA USA) equipped with a 20mm cylindrical probe. Force distance curves were obtained operating at a constant speed of 30 mm $min^{-1}$ until 30% of the sample depth was penetrated. The texture profiles of gels were analyzed using NEXYGEN Plus 4.0 data analysis software and the following parameters were obtained from the texture profile: hardness (the peak force in the first compression cycle), cohesiveness (the work area during the second compression divided by the work area during the first compression cycle), and adhesiveness (the work necessary to upstroke the probe from the sample). Six different samples were measured for each gel type.

***Rheological properties - frequency sweep analysis.*** The viscoelastic properties of the gels were studied using a frequency sweep analysis using an MCR 302 rheometer (Anton Paar, Graz, Austria). Frequency sweep measurements were performed at 4°C and 0.01-10 Hz with a maximum strain of 0.1% using 25 mm sandblasted parallel plate geometry and gap settings of 1 mm. Measurements were conducted within the linear viscoelastic range (LVR) determined by a stress sweep test from 0.001 to 1 Pa. 10 ml of inoculated milk and PPI emulsions were poured onto a 5 cm sterile Petri dishes, incubated at 37°C for 16 h, and cooled at 4°C for 24 h. Then samples were transferred to the precooled

rheometer lower plate (4°C) using a plastic spatula, the upper plate was lowered, the sample was cooled for 5 min at 4°C, and analysis was then initiated. The storage modulus (G') and loss modulus (G") were determined as a function of frequency. All samples were measured in triplicate.

***Water holding capacity (WHC).*** The water holding capacity (WHC) was determined based on methods previously described (Kocher and Foegending, 1993; Serra *et al.,* 2009) with several changes. 500 μl of inoculated PPI emulsion at different homogenization pressure and inoculated milk were loaded on a special centrifuge filter unit composed of a 2 ml micro-centrifugal tube equipped with nylon filter (0.45 μm) (Micro-Centrifugal Filters (F2517-4), Thermo Scientific, USA). All the tubes were incubated at 37°C for 16 h, and cooled at 4°C for 24 h. Then, the stored samples were centrifuged at 5000 g for 20 min at 25°C. Centrifuge tubes, filter, gels samples and water loss were weighted (mg), and the WHC (%) was determined based on the following equation:

$$\textbf{Equation 1}: WHC\ [\%] = \left[1 - \frac{W_2}{W_1}\right] \times 100$$

where $W_1$ is the initial weight of the sample (mg), and $W_2$ is the weight of the pellet after centrifuge (mg). Two replicates were examined for each PPI and milk gel sample.

***Statistical analysis.*** The significance of the influence of (U)HPH on PPI emulsions and gels properties were calculated using a one-way ANOVA test with post-hoc Tukey (Honestly Significant Difference) by Origin 2019 (OriginLAb, USA), with a significance of $p$<0.05. The significant differences between PPI and milk gels and emulsion were calculated using a t-test (Excel, Microsoft 2016) with a significance of $p$<0.05.

**(U)HPH affects emulsion properties**

Potato protein has three main groups of proteins clearly distinguished in their molecular weight: patatin (~40 kDa), protease inhibitors (5-25 kDa), and high molecular weight proteins. Potato protein fractions of the commercially available PPI were characterized by SDS-PAGE and presented in **Fig. 1.**

In order to investigate the effect of (U)HPH on PPI techno-functional properties, the effect of (U)HPH as a pre-processing step on the protein itself was studied, hypothesizing that a preliminary (U)HPH step applied for the PPI solution before the addition of oil can contribute to stabilization against sedimentation of the protein in the emulsion systems due to improved solubility or dispersibility of the protein. Protein solubility is critical to many protein functional properties such as emulsification and gelation (Yang and Powers, 2016). As previously reported, improving protein solubility and surface hydrophobicity of food derivatives, including protein isolates, could result in improved functionalities by influencing the charge of the proteins, reducing the molecular weight, and improving surface activity by exposure of the hydrophobic domains. In this work, we studied the effect of (U)HPH as a pre-processing step by examining different inlet temperatures ($T_{in}$) and homogenization pressures, and the optimal solution is presented - homogenization at 200 MPa and $T_{in}$=15°C. PPI solubility with and without the pre-processing step was estimated and expressed as the ratio of the protein content in the supernatant to the protein content in the original suspension (**Fig. 2A**). Images of PPI emulsions, homogenized at different pressures and obtained from PPI solutions treated with and without a pre-processing are shown in **Figs. 2B** and **2C,** respectively. As clearly shown, the pre-processing step increases the PPI solubility. There is a significant difference in PPI solubility of the treated and untreated PPI solutions, 97.1±1.1 (%) and 92.7±0.8 (%), respectively ($p$<0.05). The pre-processing step raised the yield and saved 5% of the protein to be lost as sediment. Furthermore, as can be visually observed in **Fig. 2B** as compared to **Fig. 2C,** the pre-processing step resulted in a lower content of sediment formed after emulsification even when the emulsion itself was formed at 200 MPa (sample 5).

The formation of emulsions consists of deformation and breakup of liquid droplets, followed by adsorption of surface-active molecules (e.g., proteins), creating a fine colloidal dispersion. Elongation or deformation of droplets is a requisite for breakup since the average diameter of droplets entering the gap is much larger than the gap itself. The newly created emulsion droplets can collide between them due to Brownian motions and hydrodynamic interactions, leading to the formation of larger droplets, coalescence, which is avoided by the addition of stabilizers. HPH has received intense attention as a physical mean for achieving stable suspensions (solid in liquids). Emulsification utilizing HPH is a dynamic process controlled by numerous factors starting with the HPH process itself (homogenization pressure and flow rate, flow conditions, valve design and configuration, geometry, number of passes) and ending with the properties of emulsifying agents, including type and concentration of emulsifiers and stabilizers, viscosity, density, and interfacial properties. The PSD of the PPI emulsions treated with a pre-processing step or not was examined as a function of the homogenization pressure, hypothesizing (based on previous work conducted on soy protein) that the particle size of the PPI emulsions will reduce as homogenization pressure increases (Cruz *et al.,* 2007), and the results are shown in **Fig. 3A.** The PSD of the PPI emulsions with and without the pre-processing step is characterized by a bimodal distribution. As HPH pressure level increased, an emulsion with smaller particle size is formed while keeping the bimodal distribution (**Fig. 3A**). The differences between the particle sizes between samples at the same pressure with and without pre-treatment (**Fig.**

**3A**, right and left panels, respectively) are small possibly partially due to the centrifugation step performed for the removal of large particles that interfered with the measurement of the emulsions prepared with the non-pre-treated protein. Emulsions formed by homogenization at 30 MPa (**Fig. 4A**) present peaks that do not appear at higher pressures. At homogenization pressures higher than 30 MPa, a clear shift of the PSD curves to smaller particles in the emulsions treated with a pre-processing step can be observed.

The color of a food product is an essential sensory attribute affecting the acceptance of the product by the consumers. Although a protein solution is usually of grey/brown color, the application of (U)HPH allowed the formation of whiter colored emulsions due to increased light scattering of the oil droplets. Lightness value, L*, describes the light reflecting or transmitting the capacity of an object. As shown in **Figs. 2B, 2C** and **Fig. 3B,** whiter emulsions were obtained after homogenization reflecting the increased light scattering of the oil droplets. This result is in correlation with the observed reduction in PSD after homogenization, yet no statistically significant difference was observed between pressure levels, despite the continuous decrease in particle size. The obtained L* coordinate of the UHT milk (our control sample) is similar to the values previously disclosed (Popov-Raljić *et al.,* 2008). Although the lightness of emulsions increased due to homogenization, it was still lower than the lightness of regular milk.

Emulsions are thermodynamically unstable and tend to breakdown over time due to various physicochemical mechanisms including Ostwald ripening, coalescence, flocculation, gravitational separation, particle coalescence, and phase separation (i.e., creaming). If the emulsion separates before a yogurt-like structure is formed, poor textural yogurt properties will be received. Thus, their physical stability against separation is an essential parameter indicating the shelf life of emulsions and their separation. One of the methods for testing the physical stability of an emulsion is by analytical centrifugation and based on the time and space-resolved transmission extinction profiles to quantify the phase separation (creaming) velocity of emulsions. As previously reported, creaming tends to be the main destabilization mechanism in plant (such as soy, rice, and oat)-based milk substitutes (Durand *et al.,* 2003; Sethi *et al.,* 2016).

The physical stability of PPI emulsions and milk was measured in an analytical centrifuge (LUMisizer), and the creaming velocity was calculated and shown in **Fig. 4.** The milk sample showed the lowest creaming velocity and was the most stable emulsion for separation. Among the PPI emulsions, the creaming velocity decreased, i.e., the stability against separation increases, as the pressure homogenization increased. These findings are correlated with the decrease in PSD with increasing homogenization pressure, and with previous findings according to which the stability of plant-based drinks correlates with their particle sizes (Durand *et al.,* 2003). PPI emulsions homogenized at a pressure range of 30-200 MPa presented considerable stability with no significant differences between them. The creaming velocity of the emulsion homogenized at 0.1 MPa was significantly different from the other emulsion homogenized at higher homogenization pressure. As shown in **Fig. 4B,** the creaming effect is the most significant in the 0.1 MPa emulsion compared to the other homogenization pressures. At the same time, qualitatively, it seems that the relatively minimal phase separation is at the emulsion homogenized at 200 MPa. The relatively low rates of creaming and clarification are associated with the decreasing size of oil droplets PPI emulsions homogenized at increasing pressures. A comparison between milk and PPI emulsion was conducted at 30 MPa, which is the homogenization pressure mostly used in the dairy industry, and at 200 MPa. In both cases, there was no significant difference between the creaming velocity of milk to PPI emulsions homogenized at 30 MPa and 200 MPa, indicating that the utilization of (U)HPH has helped to receive a more stable emulsion.

**<u>(U)HPH affects gel properties</u>**

In the present work, we imitate the fermentation process of milk yogurt by inoculating the homogenized PPI emulsions with LAB. As previously reported, the protein content of plants-based yogurt substitutes varies from 0.6g/100g to 7.9g/100g, wherein the commercial products reported have a protein content of 5.1g/100g (Grasso *et al.,* 2020). In this work, we chose to investigate the gels obtained from PPI emulsions with protein content similar to that of the commercial products.

The pH value was monitored during the development of the fermentation for 16 h at 37°C for inoculated milk, and 200 MPa PPI emulsion (**Fig. 5A**). Patatin was reported to have PI at pH=4.9 or 5.25. Aggregation of caseins occurs as the pI at pH=4.6 is reached. As can be seen from the pH curves, the pH value of both solutions decreased to values below the PI at the end of the fermentation with similar pH value. Similar profiles were previously reported for the pH development of milk yogurt and soy yogurt substitute (Grygorczyk and Corredig, 2013; Lucey *et al.,* 1998). Reaching a pH below the PI was received in a similar time frame (5-6 h). After 16 h of fermentation, the pH values of milk yogurt and PPI gel were $4.24 \pm 0.04$ and $4.44 \pm 0.07$, respectively, without significant difference between them. The pH of the PPI yogurt substitute obtained is similar to those of the commercial plant-based yogurt alternatives, as previously reported (Grasso *et al.,* 2020).

Moreover, fermentation progress was also monitored by the growth of LAB during the fermentation at 4-time points, and the results are presented in **Fig. 5B.** The reduction in the pH until reaching the PI of PPI and milk is taking about 4-6 h (**Fig. 5A**). As can be seen from **Fig. 5B,** the population of LAB increased from a range of $5.78 \pm 0.04$ - $6.27 \pm 0.02$ log (CFU/ml) at the inoculation time (t=0) to $7.86 \pm 0.01$ - $8.76 \pm 0.02$ log (CFU/ml) after 16 h of fermentation. At the beginning of

the fermentation, in all PPI gels, the growth was hindered, probably due to the lag phase that can also be observed in the monitored pH in **Fig 5A;** whereas the growth in milk after 3 h of fermentation was nearly 8 log (CFU/ml). There was no significant difference between the PPI gels at different pressures. While significant differences in LAB growth were found between milk yogurt and 200 MPa PPI gels at 3, 6, and 16 h, in both cases, the concentration of LAB between 6 and 16 h was only slightly changed, indicating that the LAB possibly reached the stationary phase. On the other hand, it seems that the growth of LAB in the other PPI gels, at the same time points, was still in its exponential phase.

Gels play an important role in food texture and are formed mostly by proteins, starch, and polysaccharides. Therefore, understanding the rheology and microstructure of food is an important tool for improving consumer satisfaction. The storage modulus G' represents the elastic behavior of the network and strength of the structure contributing to the 3D network. The loss modulus G" represents the viscous behavior of a sample (Doucet *et al.,* 2001; Gunasekaran and Ak, 2000; Tabilo-Munizaga and Barbosa-Cánovas, 2005). Therefore, if the storage modulus is higher than the loss modulus, the sample can be regarded as a solid-like material such as a gel. The rheological properties of PPI yogurt-like structure obtained from emulsions homogenized at different pressures and milk yogurts were characterized by frequency-dependent dynamic oscillatory measurement, and a typical curve is presented in **Fig. 6.**

The dependence of the storage modulus as a function of frequency can be expressed by the Equation 2 (Arogundade *et al.,* 2012):

$$\textbf{Equation 2}: G'=K(\omega)n \text{ or } \log G'= n \log \omega+k$$

where G' represents the storage modulus, $\omega$ represents the oscillation frequency, n represents the slop in a log-log plot, and K is a constant. The parameters n and k, providing information regarding the gel structure and its characteristics, can be an additional tool for identifying the difference between physical gels, entanglement networks, and covalently cross-linked gels. The n and k values may represent the nature of the gel network and the strength of the molecular interactions of the tested system, respectively (Arogundade *et al.*, 2012; Gunasekaran and Ak, 2000; Zhang *et al.,* 2017). The k values reflect the levels of molecular interactions in the gel matrix. As k values increase, the molecular interactions are higher. The n and k parameters were calculated based on Equation 2 and are presented in **Table 1.**

Both milk yogurt and all PPI yogurt-like structures showed a gel-like behavior, indicating that the storage modulus was higher than the loss modulus (not shown) at all frequencies range, i.e., the elastic contribution was more than the viscous thus a gel state can be determined (a gel-like behavior). A reduction in the network strength can be observed in the decrease in G' and G" curves (Gabriele *et al.,* 2001). The G' and G" curves of PPI curves were higher than those of milk yogurt. This result could imply a reduced network strength in milk gels compared to PPI gels, yet mainly likely originating from the higher content of protein in PPI emulsion, contributing to network structure strength (Tunick, 2000). Gelation process is achieved due to a fine balance between repulsive and attractive forces between proteins both in their native and unfolded forms. Gel formation depends on the formed aggregates - too large or rapidly growing aggregates can result in precipitation or an inhomogeneous structure, while too small or fewer aggregates will not be able to form a 3D network (Creusot *et al.,* 2011). Grygorczyk and Corredig (2013) described the acid gelation of soy proteins by LAB, the driving forces behind acid-induced gelation is the non-covalent bonds such as salt bridging, hydrogen bonding, and Van der Waals forces. During LAB fermentation, the proton gradually neutralized the surface charges until the point that the net charge reaches zero and the soy proteins destabilized, aggregated, and formed a gel network. The rate of acidification has an influence on the protein rearrangement - the slower the pH reduction, the more time for proteins to rearrange and interact with each other (Grygorczyk and Corredig, 2013). It was described that after acidification, soy drink treated with heat treatment favored hydrophobic interactions in the gel network formation while soy drink treated with (U)HPH treatments led to a gel that was stabilized by hydrogen bonds, thus improving gel characteristics in refrigerated conditions *(Cruz et al.,* 2009). Most food gels are considered as physical gels due to their frequency-dependent behavior (Basu *et al.,* 2017; Renard *et al.,* 2006). All the examined gels have an n>0 (**Table 1**), indicating that the formed gels are physical gels, as previously reported for milk yogurt (Gabriele *et al.,* 2001). K constant values are increasing with the rise in homogenization pressure, wherein the highest K value was obtained for the 200 MPa PPI gel, and the lowest was for milk, indicating that the molecular interactions in PPI gels may be stronger than in milk.

**Table 1.** The slope (n) and constant (k) of the PPI yogurt-like products and milk yogurt

| Type | Homogenization pressure [MPa] | n-slope | k-constant |
|---|---|---|---|
| PPI | 0 | 0.151±0.003 [a] | 871.609±0.151[a] |
| | 30 | 0.166±0.002 [a,A] | 956.700±103.680 [a,A] |
| | 75 | 0.163±0.001 [a] | 978.325±26.907 [a] |
| | 120 | 0.166±0.001 [a] | 1018.069±39.008 [a] |
| | 200 | 0.162±0.005 [a,A] | 1075.084±35.269 [a,A] |
| Milk | - | 0.176±0.006 [A] | 195.738±16.221 [B] |
| * Difference in the small superscript letter indicates a statistical difference between homogenization at different pressures, while difference in the capital letter indicates statistically significant differences between PPI gels homogenized at 30 and 200 MPa to milk (*p*<0.05, *n*=3). | | | |

As the formation of yogurt structure requires several hours, if the emulsion separates before the structure is formed, poor textural yogurt properties are received. Emulsions treated with higher (U)HPH pressure will have better stability against gravitational separation and flocculation. Therefore, the utilization of (U)HPH can assist in forming fermented products with no phase separation and yogurt-like consistency, firmness, and WHC. Improvement of textural properties of yogurt by HPH was also previously described for bovine milk yogurt and yogurt alternatives prepared from soy drink treated with (U)HPH (Ferragut *et al.,* 2009; Serra *et al.,* 2007). As described in Example 1, an emulsion with smaller particles and increased physical stability was received as the homogenization pressure increases. Upon fermentation with LAB, a yogurt-like structure was formed.

The effect of utilizing (U)HPH on the physical stability of PPI gels was examined with analytical centrifugation, and the time and space-resolved transmission extinction profiles (Glusac *et al.,* 2018; Glusac *et al.,* 2017; Torres *et al.,* 2014). A typical time and space profiles of PPI gels and milk yogurt during accelerated physical stability study and the percentage of separation of PPI gels in the cuvettes after the analysis are presented in **Fig. 7A.** The results clearly show a decrease in phase separation as the homogenization pressure increases. It can also be observed that in PPI emulsion cuvettes after the analysis, the phase separation is the most significant in the 0.1 MPa emulsion compared to the other homogenization pressures (excluding 30 MPa), while qualitatively, it seems that the relatively minimal phase separation is at the emulsion homogenized at 200 MPa. There is a significant difference between the % separation of the ultra-high-pressure gels, 120 and 200 MPa, to the other investigated pressures (p<0.05).

L* values of the PPI yogurt substitutes and milk yogurt are presented in **Fig. 8A.** The excepted trend in L* values of PPI is similar to that of the emulsion (see Example 1). L* value of 0.1 MPa PPI gel is significantly different from the PPI gels homogenization at higher pressures (p<0.05), as expected. The received L* values of PPI gels obtained from emulsions homogenized at 30-200 MPa are similar to the commercial plant-based yogurts (Grasso *et al.,* 2020). While homogenization increased the whiteness of the gel, no statistically significant effect was observed for pressure level, and the final level was still lower than that of milk-based yogurt. The received L* value of the UHT milk yogurt was similar to values in the literature (Pelaes Vital *et al.,* 2015). The obtained color of the yogurt was still statistically significantly different from PPI gels obtained from 30 and 200 MPa PPI emulsions. PPI gels with and without a pre-processing step are presented in **Figs. 8B-8C.** The sediment level in PPI emulsions, occurring due to the partial protein solubility of most plant proteins (including PPI), was qualitatively reduced due to the pre-processing step of the protein only. Also, as mentioned above (see Example 1), the pre-processing reduced the sediment level and creaming effect (**Fig. 9C**) compared to the yogurt alternatives obtained from the solution without the pre-processing step (**Fig. 8B**).

The observed L* value of PPI yogurt-like structure was slightly higher than those of PPI emulsions. The decrease in the pH in PPI emulsion could be a possible contributing factor for the changes in the PPI gels' lightness compared to the original emulsions, as reported before, that pH affects the color of protein solutions.

Texture is an important attribute in food acceptance by consumers. A correlation between sensory evaluation to textural parameters obtained from TPA force/deformation curves has been reported and provide additional information to that obtained from rheological measurements (Chandra and Shamasundar, 2015; Pons and Fiszman, 1996). The calculated parameters, hardness, adhesiveness, and cohesiveness obtained by TPA (**Figs. 9A-9C**) showed that the 200 MPa yogurt alternative has the highest hardness compared to that observed at other pressures and that of milk yogurt (*p*<0.05). The lower value of milk-based yogurt at least partially stems from the difference in protein content (Gursel *et al.,* 2016; Pakseresht *et al.,* 2017). The adhesiveness of 200 MPa is significantly different from milk yogurt, and there is no difference between pressure levels. There are no statistically significant differences in the cohesiveness between different pressures and compared to milk yogurt. The difference between the textural attributes of gels obtained by HPH treated emulsions may be related to gel microstructure differences.

Water holding capacity (WHC) is a physical property defined as the ability of a sample/product to prevent water from being released from the three-dimensional structure of said sample/product. In food matrices, it can be defined as the ability of food to hold its own and the added water during the application of forces, pressing, centrifugation, or heating. The WHC of gels, especially yogurt, is a critical parameter since it may imply on the shelf life of a product. WHC is related to syneresis due to the intrinsic properties of the gels, and water may be lost after extended storage (Cruz *et al.,* 2009). The obtained WHC values of PPI gels (excluding 0.1 MPa) were similar to those reported for commercial plant-based yogurts substitutes (Grasso *et al.,* 2020). As shown in **Fig. 10,** PPI gels have significantly higher WHC compared to the control, milk-based yogurts, probably due to the different protein concentrations in the original emulsions (3.4% in bovine milk *vs.* 5% in PPI emulsions). There is no pressure level-dependent difference between the PPI yogurt-like products. This result suggests that the WHC, in this protein concentration, is not related to the size of oil droplets in the emulsion or the physical stability as quantified by the analytical centrifugal analysis. High WHC values may be an indication for better holding capacity of water and could be an advantage for improving the shelf life of such yogurt alternatives, in terms of physical stability without the need to add stabilizers.

**Study 2. Utilization of HPH for plant-protein based yogurt-like products with different oil content**

**Materials and Methods**

***Particle size distribution measurements.*** Particle size distribution (PSD) of the PPI emulsions was measured by static light scattering measurement (Mastersizer 3000, Malvern Instruments, UK). All samples were prepared in duplicate, and each of the repetitions was measured five times.

***Whiteness index evaluation.*** Color parameters of PPI emulsions and gels were measured using a Minolta chromameter equipped with an 8mm-diameter measuring area, uses diffuse illumination and 0° viewing angle (CR-300, Konica Minolta Sensing Americas, Ramsey, NJ) according to the CIELAB scale (Mclaren and Rigg, 2008). White calibration plate was used for the instrument recalibration. All samples were prepared in duplicate, and each of the repetitions was measured three times. The whiteness index (WI) was determined as follows (Vargas *et al.,* 2008):

$$\text{Equation 3: } WI = 100 - \sqrt{(100 - L)^2 + a^2 + b^2}$$

***Accelerated physical stability of emulsion.*** The physical stability of PPI emulsions with three different oil concentrations was evaluated using an analytical centrifugal analyzer (LUMisizer, L.U.M GmbH, Berlin, Germany). The transmission extinction profile was recorded at 2000 rpm, 20°C for 11 h.

**Results**

In the present study, the influence of HPH on the emulsion properties of PPI-based yogurt-like products with low (1.5%, v/v) and high (10%, v/v) oil content was tested and compared to the 3% v/v oil as in study 1.

The PSD of emulsions containing PPI and different concentrations of canola oil, treated with a pre-processing step, was examined as a function of the homogenization pressure. As shown in **Fig. 11A,** HPH pressure level increased, an emulsion with smaller particle size was formed while keeping the bimodal distribution at the highest homogenization pressure.

In yogurt, we expect a high level of whiteness index (WI) correlated with the white color. As shown in **Fig. 11B,** whiter emulsions were obtained after homogenization, reflecting the increased light scattering of the oil droplets. This result correlates with the observed reduction in PSD after homogenization, yet no statistically significant difference was observed between pressure levels, despite the continuous decrease in particle size. Although the WI of the emulsions, containing 1.5% and 3% oil, increased due to homogenization, it was still lower than the WI of regular milk (~83). However, at a higher oil concentration (10%), the WI is becoming very close to that of regular milk.

Analytical centrifugation and the time and space-resolved transmission extinction profiles evaluated under accelerated conditions were used to quantify the phase separation (creaming) velocity of the emulsions. Among PPI emulsions, it can be visually observed (**Fig. 12B**) that the stability against separation increased when the HPH treatment pressure increased and confirmed by a decrease in the creaming velocity although statistical significance was only obtained between samples treated by the laboratory homogenizer and all HPH samples. These results correlate with the decrease in PSD with increasing homogenization pressures.

The rheological properties of PPI yogurt-like structure obtained from varying oil concentration emulsions homogenized at different pressures were characterized by frequency-dependent dynamic oscillatory measurement. The average curves are presented in **Figs. 13A-13C.** For yogurt and all PPI yogurt-like systems, the G' was higher than the G" at all tested frequencies range (data not shown), indicating that the elastic contribution was more than the viscous, a

characteristic of gel-like behaviors, in all oil concentrations. HPH increased the G' all over the frequency range in all oil concentrations, with a larger difference for higher pressure at lower oil content.

WI of the PPI yogurt substitutes is shown in **Fig. 13D** and **Fig. 14,** and is similar to the trend of the emulsions (see **Fig. 11B**). WI of 0.1 MPa system was significantly ($p<0.05$) different from the values of HPH treated yogurt alternatives in all oil concentrations. No statistically significant effect was observed between pressure levels at 1.5% and 10% oil concentration. The observed WI of PPI yogurt-like structure is slightly higher than those of PPI emulsions.

The utilization of HPH allowed the production of a stabilizer-free and non-allergenic PPI yogurt substitute with higher protein content, with high and low oil concentrations. In the non HPH treated sample we see both the creaming effect and the color being very different from the expected from milk yogurt.

**Study 3. Influence of HPH on different source of pea protein isolates and the formation of yogurt substitutes**

**Materials and Methods**

***Particle size distribution measurements.*** The particle size distribution (PSD) of 5% PI suspensions before and after the pre-processing step at 200 MPa, $T_{in}$=15°C, was measured by static light scattering measurement (Mastersizer 3000, Malvern Instruments, UK). The values of particle refractive index of PI suspensions and particle absorption indexes were 1.52 and 0.001, respectively. The dispersant refractive index (water) was 1.330.

***Accelerated physical stability of pea isolate suspensions.*** Physical stability under accelerated conditions of 5% PI suspension before and after the pre-processing step at 200 MPa, $T_{in}$=15°C, was measured using a an analytical centrifugal analyzer (LUMisizer, L.U.M GmbH, Berlin, Germany).

***Zeta potential measurements.*** Zeta potential of 5% PI suspensions was determined at phosphate buffer (pH=7.0, 10mM) before and after the pre-processing step at 200 MPa, $T_{in}$=15°C, using a Zetasizer Nano ZS (Malvern Instruments, UK).

**Results**

In the present study, the effect of U(HPH) (200 MPa, $T_{in}$=15°C) on the physical stability against separation of five different commercially available pea protein isolates (PI) (5%), more specifically Peal (Yantai Shuangta Food Co., Ltd.); C9 and B9 (Cosucra); and 85D and 85F (ROQUETTE), was tested. The physical stability was tested during time (24h).

Visually, the HPH pre-processing step of the protein suspensions increases the suspensions' physical stability immediately after the homogenization. Some isolates were separated after 1h and 24h, yet in all cases, pre-processing step provided stabilization. This was verified by other methods as well.

A bimodal distribution characterizes the PSD of the PI suspensions with and without the pre-processing step. The HPH pressure level increased, a suspension with smaller particle size is formed while keeping the bimodal distribution (**Fig. 16**). A clear shift of the PSD curves to smaller particles after the HPH pre-processing step can be observed in all five different isolates.

Analytical centrifugation and the time and space-resolved transmission extinction profiles evaluated under accelerated conditions were used to test the phase separation (sedimentation). In most cases, a significant difference ($p<0.05$) was also observed between most of the isolates before and after the pre-processing step. These results correlate with the decrease in PSD after the HPH step since the stability of suspensions and emulsions is a function of the particle size. As can also be visually observed (**Fig. 16B**), the stability against separation increased after HPH treatment.

The zeta potential was affected by the HPH processing step (**Fig. 17**), suggesting that the electrostatic repulsion was reduced by HPH.

**REFERENCES**

Arogundade, L.A., Mu, T.H., Añón, M.C. (2012). Heat-induced gelation properties of isoelectric and ultrafiltered sweet potato protein isolate and their gel microstructure. Food Research International, 49(1), 216-225

Basu, S., Shivhare, U.S., Chakraborty, P. (2017). Influence of sugar substitute in rheology of fruit gel. In Advances in Food Rheology and Its Applications (355-376). Elsevier Inc.

Bouaouina, H., Desrumaux, A., Loisel, C., Legrand, J. (2006). Functional properties of whey proteins as affected by dynamic high-pressure treatment. International Dairy Journal, 16(4), 275-284

Bradford, M.M. (1976). A rapid and sensitive method for the quantitation of microgram quantities of protein utilizing the principle of protein-dye binding. Analytical Biochemistry, 72(1-2), 248-254

Brandt, K., Christensen, L.P., Hansen-Møller, J., Hansen, S.L., Haraldsdottir, J., Jespersen, L., Purup, S., Kharazmi,

A., Barkholt, V., Frøkiær, H., Kobæk-Larsen, M. (2004). Health promoting compounds in vegetables and fruits: a systematic approach for identifying plant components with impact on human health. Trends in Food Science and Technology, 15(7-8), 384-393

Brückner-Gühmann, M., Vasil'eva, E., Culetu, A., Duta, D., Sozer, N., Drusch, S. (2019). Oat protein concentrate as alternative ingredient for non-dairy yoghurt-type product. Journal of the Science of Food and Agriculture, 99(13), 5852-5857

Chandra, M.V., Shamasundar, B.A. (2015). Texture profile analysis and functional properties of gelatin from the skin of three species of fresh water fish. International Journal of Food Properties, 18(3), 572-584

Chang, S.K.C., Zhang, Y. (2017). Protein analysis. In S. S. Nielsen (Ed.), Food Analysis (5th ed., pp. 315-331)

Creusot, N., Wierenga, P.A., Laus, M.C., Giuseppin, M.L.F., Gruppen, H. (2011). Rheological properties of patatin gels compared with β-lactoglobulin, ovalbumin, and glycinin. Journal of the Science of Food and Agriculture, 91(2), 253-261

Cruz, N., Capellas, M., Hernández, M., Trujillo, A.J., Guamis, B., Ferragut, V. (2007). Ultra high pressure homogenization of soymilk: Microbiological, physicochemical and microstructural characteristics. Food Research International, 40(6), 725-732

Cruz, N., Capellas, M., Jaramillo, D.P., Trujillo, A.J., Guamis, B., Ferragut, V. (2009). Soymilk treated by ultra high-pressure homogenization: acid coagulation properties and characteristics of a soy-yogurt product. Food Hydrocolloids, 23(2), 490-496

Doucet, D., Gauthier, S.F., Foegeding, E.A. (2001). Rheological characterization of a gel formed during extensive enzymatic hydrolysis. Journal of Food Science, 66(5), 711-715

Durand, A., Franks, G.V, Hosken, R.W. (2003). Particle sizes and stability of UHT bovine, cereal and grain milks. Food Hydrocolloids, 17(5), 671-678

Ferragut, V., Cruz, N.S., Trujillo, A., Guamis, B., Capellas, M. (2009). Physical characteristics during storage of soy yogurt made from ultra-high pressure homogenized soymilk. Journal of Food Engineering, 92(1), 63-69

Gabriele, D., De Cindio, B., D'Antona, P. (2001). A weak gel model for foods. Rheologica Acta, 40, 120-127

Glusac, J., Davidesko-Vardi, I., Isaschar-Ovdat, S., Kukavica, B., Fishman, A. (2018). Gel-like emulsions stabilized by tyrosinase-crosslinked potato and zein proteins. Food Hydrocolloids, 82, 53-63

Glusac, J., Isaschar-Ovdat, S., Kukavica, B., Fishman, A. (2017). Oil-in-water emulsions stabilized by tyrosinase-crosslinked potato protein. Food Research International, 100, 407-415

Grasso, N., Alonso-Miravalles, L., O'Mahony, J.A. (2020). Composition, physicochemical and sensorial properties of commercial plant-based yogurts. Foods, 9(3), 252

Grobben, G.J., Van Casteren, W.H.M., Schols, H.A., Oosterveld, A., Sala, G., Smith, M. R., Sikkema, J., de Bont, J.A.M. (1997). Analysis of the exopolysaccharides produced by Lactobacillus delbrueckii subsp. bulgaricus NCFB 2772 grown in continous culture on glucose and fructose. Applied Microbiology and Biotechnology, 48(4), 516-521

Grygorczyk, A., Corredig, M. (2013). Acid induced gelation of soymilk, comparison between gels prepared with lactic acid bacteria and glucono-δ-lactone. Food Chemistry, 141(3), 1716-1721

Gunasekaran, S., Ak, M.M. (2000). Dynamic oscillatory shear testing of foods - selected applications. Trends in Food Science and Technology, 11(3), 115-127

Gursel, A., Gursoy, A., Anli, E.A.K., Budak, S.O., Aydemir, S., Durlu-Ozkaya, F. (2016). Role of milk protein-based products in some quality attributes of goat milk yogurt. Journal of Dairy Science, 99(4), 2694-2703

Hickisch, A., Beer, R., Vogel, R.F., Toelstede, S. (2016). Influence of lupin-based milk alternative heat treatment and exopolysaccharide-producing lactic acid bacteria on the physical characteristics of lupin-based yogurt alternatives. Food Research International, 84, 180-188

Klost, M., Drusch, S. (2019). Structure formation and rheological properties of pea protein-based gels. Food Hydrocolloids, 94, 622-630

Kocher, P.N., Foegending, E.A. (1993). Microcentrifuge-based method for measuring water-holding of protein gels. Journal of Food Science, 58(5), 1040-1046

Lorusso, A., Coda, R., Montemurro, M., Rizzello, C.G. (2018). Use of selected lactic acid bacteria and quinoa flour for manufacturing novel yogurt-like beverages. Foods, 7(4), 51

Lucey, J.A., Tamehana, M., Singh, H., Munro, P.A. (1998). A comparison of the formation, rheological properties and microstructure of acid skim milk gels made with a bacterial culture or glucono-δ-lactone. Food Research International, 31(2), 147-155

Mårtensson, O., Öste, R., Holst, O. (2000). Lactic acid bacteria in an oat-based non-dairy milk substitute: fermentation characteristics and exopolysaccharide formation. LWT - Food Science and Technology, 33(8), 525-530

Massoud, R., Belgheisi, S., Massoud, A. (2016). Effect of high pressure homogenization on improving the quality of milk and sensory properties of yogurt: a review. International Journal of Chemical Engineering and Applications, 7(1), 66-70

Mclaren, K., Rigg, B. (1976). XII-the SDC recommended colour-difference formula: change to CIELAB. Journal of the

Society of Dyers and Colourists, 92(9), 337-338
Pakseresht, S., Mazaheri Tehrani, M., Razavi, S.M.A. (2017). Optimization of low-fat set-type yoghurt: effect of altered whey protein to casein ratio, fat content and microbial transglutaminase on rheological and sensorial properties. Journal of Food Science and Technology, 54(8), 2351-2360
Pelaes Vital, A.C., Goto, P.A., Hanai, L.N., Gomes-da-Costa, S.M., de Abreu Filho, B.A., Nakamura, C.V., Matumoto-Pintro, P.T. (2015). Microbiological, functional and rheological properties of low fat yogurt supplemented with Pleurotus ostreatus aqueous extract. LWT - Food Science and Technology, 64(2), 1028-1035
Pons, M., Fiszman, S.M. (1996). Instrumental texture profile analysis with particular reference to gelled systems. Journal of Texture Studies, 27(6), 597-624
Popov-Raljić, J.V., Lakić, N.S., Laličić-Petronijević, J.G., Barać, M.B., Sikimić, V.M. (2008). Color changes of UHT milk during storage. Sensors, 8(9), 5961-5974
Renard, D., Van De Velde, F., Visschers, R.W. (2006). The gap between food gel structure, texture and perception. Food Hydrocolloids, 20(4), 423-431
Serra, M., Trujillo, A. J., Guamis, B., & Ferragut, V. (2009). Evaluation of physical properties during storage of set and stirred yogurts made from ultra-high pressure homogenization-treated milk. Food Hydrocolloids, 23(1), 82-91
Serra, M., Trujillo, A.J., Quevedo, J.M., Guamis, B., Ferragut, V. (2007). Acid coagulation properties and suitability for yogurt production of cows' milk treated by high-pressure homogenisation. International Dairy Journal, 17(7), 782-790
Sethi, S., Tyagi, S.K., Anurag, R.K. (2016). Plant-based milk alternatives an emerging segment of functional beverages: a review. Journal of Food Science and Technology, 53(9), 3408-3423
Tabilo-Munizaga, G., Barbosa-Cánovas, G.V. (2005). Rheology for the food industry. Journal of Food Engineering, 67(1-2), 147-156
Torres, M.D., Fradinho, P., Raymundo, A., Sousa, I. (2014). Thermorheological and textural behaviour of gluten-free gels obtained from chestnut and rice flours. Food and Bioprocess Technology, 7, 1171-1182
Tunick, M.H. (2000). Rheology of dairy foods that gel, stretch, and fracture. Journal of Dairy Science, 83(8), 1892-1898
U.S. FDA. (2013). GRAS notices - potato protein isolates (No. 447). Retrieved March 31, 2020, from U.S. Food and Drug administration website: https://www.accessdata.fda.gov/scripts/fdcc/index.cfm?set=GRASNotices
Vargas, M., Cháfer, M., Albors, A., Chiralt, A., González-Martínez, C. (2008). Physicochemical and sensory characteristics of yoghurt produced from mixtures of cows' and goats' milk. International Dairy Journal, 18(12), 1146-1152
Waglay, A., Karboune, S. (2016). Potato Proteins: functional food ingredients. In J. Singh & L. Kaur (Eds.), Advances in potato chemistry and technology (2nd ed., pp. 75-104). Amsterdam, Netherlands: Academic Press
Yang, J., Powers, J.R. (2016). Effects of high pressure on food proteins. In V. M. Balasubramaniam, G. V. Barbosa-Cánovas, & H. L. M. Lelieveld (Eds.), High pressure processing of food principles, technology and applications (1st ed., pp. 353-389)
Zannini, E., Jeske, S., Lynch, K., Arendt, E. K. (2018). Development of novel quinoa-based yoghurt fermented with dextran producer Weissella cibaria MG1. International Journal of Food Microbiology, 268(2), 19-26
Zhang, D., Mu, T., Sun, H. (2017). Calorimetric, rheological, and structural properties of potato protein and potato starch composites and gels. Starch, 69(7-8), 1600329.

## Claims

**1.** A process for the manufacturing of a homogenized emulsion for the preparation of a fermented dairy product-substitute, said process comprising:

(i) providing a soluble- or partially soluble-plant protein concentrate/isolate in a dried form, wherein said plant protein concentrate/isolate is a potato protein concentrate/isolate, pea protein concentrate/isolate, lupine protein concentrate/isolate, chick pea protein concentrate/isolate, rice protein concentrate/isolate, algae protein concentrate/isolate, lentil protein concentrate/isolate, rapeseed protein concentrate/isolate, sunflower protein concentrate/isolate, hemp protein concentrate/isolate, sesame protein concentrate/isolate, a partial hydrolysate thereof, or a combination thereof;
(ii) preparing an aqueous solution or dispersion of said plant protein concentrate/isolate;
(iii) high-pressure homogenizing said solution or dispersion, at an inlet temperature of at least 5°C and such that the temperature developed during the homogenization is lower than that at which thermal aggregation of said protein concentrate/isolate in said solution or dispersion under normal pressure conditions occurs, to minimize protein sedimentation during emulsification and increase the content of said plant protein capable of emulsifying an oil;

(iv) adding an oil to said high-pressure homogenized solution or dispersion, and homogenizing the mixture thus obtained to form an emulsion; and

(v) high-pressure homogenizing said emulsion to prevent oil separation during fermentation or storage of said emulsion,

provided that a sugar is added either to the aqueous solution or dispersion obtained in step (ii) prior to step (iii), or in addition to said oil added in step (iv).

2. The process of claim 1, wherein said homogenized emulsion is stabilizer-free.

3. The process of claim 1, wherein:

(a) said aqueous solution or dispersion is prepared in step (ii) by dissolving or dispersing said plant protein concentrate/isolate in water; or

(b) the oil added in step (iv) is a vegetarian oil; or

(c) the amount of the oil added in step (iv) is determined such that the concentration of said oil in said homogenized emulsion is equal to or higher than 5% (w/w); or

(d) said sugar is a carbohydrate allowing fermentation by fermentative bacteria.

4. The process of claim 1, wherein the amount of said plant protein concentrate/isolate in said aqueous solution or dispersion prepared in step (ii) is determined such that the concentration of said plant protein in said homogenized emulsion is equal to or higher than 3% (w/w).

5. The process of claim 4, wherein the concentration of said plant protein in said homogenized emulsion is higher than 3% (w/w), e.g., about 4%, 5%, 6%, 7%, 8%, 9%, or 10% (w/w).

6. The process of claim 3, wherein:

(a) said vegetarian oil is palm oil, coconut oil, canola oil, soybean oil, sunflower oil, olive oil, rapeseed oil, cottonseed oil, sesame oil, avocado oil, or a combination thereof; or

(b) the concentration of said oil in said homogenized emulsion is higher than 5% (w/w), e.g., about 6%, 7%, 8%, 9%, or 10% (w/w); or

(c) said carbohydrate is glucose or fructose.

7. The process of claim 1, wherein said sugar is added to the aqueous solution or dispersion obtained in step (ii) prior to step (iii).

8. The process of claim 1, wherein said sugar is added together with said oil in step (iv).

9. The process of claim 1, wherein:

(a) a sugar substitute (artificial sweetener) is added either to the aqueous solution or dispersion obtained in step (ii) prior to step (iii), or together with said oil in step (iv); or

(b) a probiotic and/or a health promoting compound is added to the aqueous solution or dispersion obtained in step (ii) prior to step (iii), or together with said oil in step (iv).

10. The process of claim 9, wherein said health-promoting compound is a prebiotic compound, colorant, betalain, antioxidant, carotenoid, lipophilic vitamin, or polyphenol.

11. The process of claim 1, wherein:

(a) the high-pressure homogenization in step (iii) is carried out under a pressure in the range of 50-400 or 50-200 megapascal (MPa); or

(b) the high-pressure homogenization in step (v) is carried out under a pressure in the range of 50-400 or 50-200 megapascal (MPa).

12. The process of claim 1, wherein step (iv) and step (v) are carried out as a single step.

**13.** The process of any one of claims 1 to 12, for the manufacturing of a yogurt or yogurt beverage-substitute, further comprising the steps:

(vi) inoculating the high-pressure homogenized emulsion with a lactic acid bacteria; and
(vii) fermenting the inoculated high-pressure homogenized emulsion to obtain said yogurt- or yogurt beverage-substitute.

**14.** The process of claim 13, wherein:

(a) the high-pressure homogenized emulsion is inoculated in step (vi) with said lactic acid bacteria to obtain a final concentration of $10^5$-$10^7$ colony forming units per gram of emulsion; or
(b) a probiotic and/or a health-promoting compound such as a prebiotic compound, colorant, betalain, antioxidant, carotenoid, lipophilic vitamin, or polyphenol, is added to the high-pressure homogenized emulsion together with said lactic acid bacteria; or
(c) the inoculated high-pressure homogenized emulsion is fermented in step (vii) until a final pH in a range of 3.7-4.5, and a final concentration of at least $5\times10^7$-$5\times10^9$ colony forming units of said lactic acid bacteria per gram of emulsion, are obtained; or
(d) the inoculated high-pressure homogenized emulsion is fermented at a temperature, or temperature range, compatible with said lactic acid bacteria, lower than that compatible with said lactic acid bacteria, or higher than that compatible with said lactic acid bacteria.

**15.** The process of any one of claims 1 to 12, for the manufacturing of a sour milk-, sour cream-, yogurt-, hard or semi-hard cheese-, kefir-, butter milk-, or ice cream-substitute, or an intermediate product for the preparation thereof, further comprising the steps:

(vi) inoculating the high-pressure homogenized emulsion with a bacteria selected from *Lactobacillus, Leuconostoc, Pediococcus, Propionibacterium, Streptococcus, Bifidobacterium,* or *Acetobacter*; a lactose fermenting yeast; or a fungi of the genus *Saccharomyces*; and
(vii) fermenting the inoculated high-pressure homogenized emulsion to obtain said sour milk-, sour cream-, yogurt-, hard or semi-hard cheese-, kefir-, butter milk-, or ice cream-substitute, or said intermediate product for the preparation thereof.

**16.** A homogenized emulsion for the preparation of a fermented dairy product-substitute, obtained by the process of any one of claims 1 to 12.

**17.** The emulsion of claim 16, wherein
the concentration of said plant protein in said emulsion is equal to or higher than 3% (w/w); and/or the concentration of said oil in said emulsion is equal to or higher than 5% (w/w).

**18.** A yogurt- or yogurt beverage-substitute obtained by the process of claim 13 or 14.

**19.** The yogurt- or yogurt beverage-substitute of claim 18, wherein:

(a) the concentration of said plant protein in said yogurt- or yogurt beverage-substitute is equal to or higher than 3% (w/w); and/or the concentration of said oil in said yogurt- or yogurt beverage-substitute is equal to or higher than 5% (w/w); or
(b) said yogurt- or yogurt beverage-substitute has a pH in a range of 3.7-4.5, and a concentration of at least $5\times10^7$-$5\times10^9$ colony forming units of said lactic acid bacteria per gram.

**20.** A sour milk-, sour cream-, yogurt-, hard or semi-hard cheese-, kefir-, butter milk-, or ice cream-substitute, or an intermediate product for the preparation thereof, obtained by the process of claim 15.

## Patentansprüche

**1.** Verfahren zur Herstellung einer homogenisierten Emulsion für die Zubereitung eines fermentierten Milchprodukt-Ersatzes, wobei das Verfahren umfasst:

(i) Bereitstellen eines löslichen oder teilweise löslichen Pflanzenproteinkonzentrats/-isolats in getrockneter Form, wobei das Pflanzenproteinkonzentrat/-isolat ein Kartoffelproteinkonzentrat/-isolat, Erbsenproteinkonzentrat/-isolat, Lupinenproteinkonzentrat/-isolat, Kichererbsenproteinkonzentrat/-isolat, Reisproteinkonzentrat/-isolat, Algenproteinkonzentrat/-isolat, Linsenproteinkonzentrat/-isolat, Rapsproteinkonzentrat/-isolat, Sonnenblumenproteinkonzentrat/-isolat, Hanfproteinkonzentrat/-isolat, Sesamproteinkonzentrat/-isolat, ein Teilhydrolysat davon oder eine Kombination davon ist;
(ii) Herstellen einer wässrigen Lösung oder Dispersion des Pflanzenproteinkonzentrats/-isolats;
(iii) Hochdruckhomogenisierung der Lösung oder Dispersion bei einer Einlasstemperatur von mindestens 5 °C und so, dass die während der Homogenisierung entwickelte Temperatur niedriger ist als diejenige, bei der eine thermische Aggregation des Proteinkonzentrats/-isolats in der Lösung oder Dispersion unter normalen Druckbedingungen auftritt, um die Proteinsedimentation während der Emulgierung zu minimieren und den Gehalt des Pflanzenproteins, das ein Öl emulgieren kann, zu erhöhen;
(iv) Zugabe eines Öls zu der unter hohem Druck homogenisierten Lösung oder Dispersion und Homogenisierung der so erhaltenen Mischung zur Bildung einer Emulsion; und
(v) Hochdruckhomogenisierung der Emulsion, um eine Ölabscheidung während der Fermentation oder Lagerung der Emulsion zu verhindern,

unter der Voraussetzung, dass ein Zucker entweder zu der in Schritt (ii) erhaltenen wässrigen Lösung oder Dispersion vor Schritt (iii) oder zusätzlich zu dem in Schritt (iv) zugegebenen Öl zugegeben wird.

**2.** Verfahren nach Anspruch 1, wobei die homogenisierte Emulsion frei von Stabilisatoren ist.

**3.** Verfahren nach Anspruch 1, wobei:

(a) die wässrige Lösung oder Dispersion wird in Schritt (ii) hergestellt durch Auflösen oder Dispergieren des Pflanzenproteinkonzentrats/-isolats in Wasser; oder
(b) das in Schritt (iv) hinzugefügte Öl ist ein vegetarisches Öl; oder
(c) die Menge des in Schritt (iv) hinzugefügten Öls so bestimmt wird, dass die Konzentration des Öls in der homogenisierten Emulsion gleich oder höher als 5 % (w/w) ist; oder
(d) dieser Zucker ist ein Kohlenhydrat, das die Fermentation durch fermentative Bakterien ermöglicht.

**4.** Verfahren nach Anspruch 1, wobei die Menge des Pflanzenproteinkonzentrats/-isolats in der in Schritt (ii) hergestellten wässrigen Lösung oder Dispersion so bestimmt wird, dass die Konzentration des Pflanzenproteins in der homogenisierten Emulsion gleich oder höher als 3% (w/w) ist.

**5.** Verfahren nach Anspruch 4, wobei die Konzentration des Pflanzenproteins in der homogenisierten Emulsion höher als 3% (w/w) ist, z.B. etwa 4%, 5%, 6%, 7%, 8%, 9%, oder 10% (w/w).

**6.** Verfahren nach Anspruch 3, wobei:

(a) bei dem vegetarischen Öl handelt es sich um Palmöl, Kokosnussöl, Canolaöl, Sojaöl, Sonnenblumenöl, Olivenöl, Rapsöl, Baumwollsamenöl, Sesamöl, Avocadoöl oder eine Kombination davon; oder
(b) die Konzentration des Öls in der homogenisierten Emulsion höher als 5 % (w/w) ist, z. B. etwa 6 %, 7 %, 8 %, 9 % oder 10 % (w/w); oder
(c) das Kohlenhydrat ist Glucose oder Fructose.

**7.** Verfahren nach Anspruch 1, wobei der Zucker der in Schritt (ii) erhaltenen wässrigen Lösung oder Dispersion vor Schritt (iii) zugesetzt wird.

**8.** Verfahren nach Anspruch 1, wobei der Zucker zusammen mit dem Öl in Schritt (iv) zugesetzt wird.

**9.** Verfahren nach Anspruch 1, wobei:

(a) der in Schritt (ii) erhaltenen wässrigen Lösung oder Dispersion vor Schritt (iii) oder zusammen mit dem Öl in Schritt (iv) ein Zuckeraustauschstoff (künstlicher Süßstoff) zugesetzt wird; oder
(b) der in Schritt (ii) erhaltenen wässrigen Lösung oder Dispersion vor Schritt (iii) oder zusammen mit dem Öl in Schritt (iv) ein Probiotikum und/oder eine gesundheitsfördernde Verbindung zugesetzt wird.

**10.** Verfahren nach Anspruch 9, wobei die gesundheitsfördernde Verbindung eine präbiotische Verbindung, ein Farbstoff, Betalain, Antioxidans, Carotinoid, lipophiles Vitamin oder Polyphenol ist.

**11.** Verfahren nach Anspruch 1, wobei:

(a) die Hochdruckhomogenisierung in Schritt (iii) unter einem Druck im Bereich von 50-400 oder 50-200 Megapascal (MPa) durchgeführt wird, oder
(b) die Hochdruckhomogenisierung in Schritt (v) unter einem Druck im Bereich von 50-400 oder 50-200 Megapascal (MPa) durchgeführt wird.

**12.** Verfahren nach Anspruch 1, wobei Schritt (iv) und Schritt (v) in einem einzigen Schritt durchgeführt werden.

**13.** Verfahren nach einem der Ansprüche 1 bis 12 zur Herstellung eines Joghurts oder Joghurtgetränke-Ersatzes, das ferner die folgenden Schritte umfasst.

(vi) Beimpfen der hochdruckhomogenisierten Emulsion mit einem Milchsäurebakterium; und
(vii)Fermentieren der geimpften, homogenisierten Hochdruckemulsion, um den Joghurt- oder Joghurtgetränke-Ersatz zu erhalten.

**14.** Verfahren nach Anspruch 13, wobei:

(a) die hochdruckhomogenisierte Emulsion in Schritt (vi) mit den Milchsäurebakterien geimpft wird, um eine Endkonzentration von $10^{5}$ - $10^{7}$ koloniebildenden Einheiten pro Gramm Emulsion zu erhalten; oder
(b) ein Probiotikum und/oder eine gesundheitsfördernde Verbindung wie eine präbiotische Verbindung, ein Farbstoff, Betalain, ein Antioxidans, ein Carotinoid, ein lipophiles Vitamin oder ein Polyphenol zusammen mit den Milchsäurebakterien zu der homogenisierten Hochdruckemulsion gegeben wird; oder
(c) die beimpfte homogenisierte Hochdruckemulsion wird in Schritt (vii) bis ein End-pH-Wert im Bereich von 3,7 bis 4,5 und eine Endkonzentration von mindestens $5 \times 10^{7}$- $5 \times 10^{9}$ koloniebildenden Einheiten der Milchsäurebakterien pro Gramm Emulsion erhalten wird; oder
(d) die beimpfte homogenisierte Hochdruckemulsion bei einer Temperatur oder einem Temperaturbereich fermentiert wird, der mit den Milchsäurebakterien kompatibel ist niedriger als der mit den Milchsäurebakterien kompatible Wert oder höher als der mit den Milchsäurebakterien kompatible Wert.

**15.** Verfahren nach einem der Ansprüche 1 bis 12 zur Herstellung eines Sauermilch-, Sauerrahm-, Joghurt-, Hart- oder Halbhartkäse-, Kefir-, Buttermilch- oder Speiseeis-Ersatzes oder eines Zwischenprodukts zu dessen Herstellung, umfassend ferner die Schritte:

(vi) Beimpfen der hochdruckhomogenisierten Emulsion mit einem Bakterium, ausgewählt aus *Lactobacillus, Leuconostoc, Pediococcus, Propionibacterium, Streptococcus, Bifidobacterium* oder *Acetobacter;* einer laktosefermentierenden Hefe; oder einem Pilz der Gattung *Saccharomyces*; und
(vii) Fermentieren der geimpften homogenisierten Hochdruckemulsion, um das Sauermilch-, Sauerrahm-, Joghurt-, Hart- oder Halbhartkäse, Kefir-, Buttermilch- oder Eiscreme-Ersatzprodukt oder das Zwischenprodukt für dessen Herstellung zu erhalten.

**16.** Homogenisierte Emulsion zur Herstellung eines Ersatzes für fermentierte Milchprodukte, erhalten nach dem Verfahren nach einem der Ansprüche 1 bis 12.

**17.** Emulsion nach Anspruch 16, wobei die Konzentration des Pflanzenproteins in der Emulsion gleich oder höher als 3 % (w/w) ist; und/oder die Konzentration des Öls in der Emulsion gleich oder höher als 5 % (w/w) ist.

**18.** Joghurt- oder Joghurtgetränke-Ersatzsubstitut, erhalten nach dem Verfahren des Anspruchs 13 oder 14.

**19.** Joghurt- oder Joghurtgetränke-Ersatz nach Anspruch 18, wobei:

(a) die Konzentration des Pflanzenproteins in dem Joghurt- oder Joghurtgetränke-Ersatz gleich oder höher als 3 % (w/w) ist; und/oder die Konzentration des Öls in dem Joghurt- oder Joghurtgetränke-Ersatz gleich oder höher als 5 % (w/w) ist; oder
(b) der Joghurt- oder Joghurtgetränke-Ersatz einen pH-Wert im Bereich von 3,7-4,5 und eine Konzentration von

mindestens $5 \times 10^7$-$5 \times 10^9$ koloniebildenden Einheiten der Milchsäurebakterien pro Gramm aufweist.

**20.** Sauermilch-, Sauerrahm-, Joghurt-, Hart- oder Halbhartkäse-, Kefir-, Buttermilch, oder Speiseeis-Ersatzes oder ein Zwischenprodukt zu dessen Herstellung, erhalten nach dem Verfahren des Anspruchs 15.

**Revendications**

**1.** Procédé de fabrication d'une émulsion homogénéisée pour la préparation d'un substitut de produit laitier fermenté, comprenant :

(i) fournir un concentré/isolat de protéines végétales solubles ou partiellement solubles en une forme séchée, dans laquelle ledit concentré/isolat de protéines végétales est un concentré/isolat de protéines de pomme de terre, un concentré/isolat de protéines de pois, un concentré/isolat de protéines de lupin, un concentré/isolat de protéines de pois chiches, un concentré/isolat de protéines de riz, un concentré/isolat de protéines d'algues, un concentré/isolat de protéines de lentilles, un concentré/isolat de protéines de colza, un concentré/isolat de protéines de tournesol, un concentré/isolat de protéines de chanvre, un concentré/isolat de protéines de sésame, un hydrolysat partiel de ceux-ci ou une combinaison de ceux-ci ;
(ii) préparer une solution ou une dispersion aqueuse de ce concentré/isolat de protéines végétales ;
(iii) homogénéiser à haute pression ladite solution ou dispersion, à une température d'entrée d'au moins 5°C et telle que la température développée pendant l'homogénéisation soit inférieure à celle à laquelle se produit l'agrégation thermique dudit concentré/isolat de protéines dans ladite solution ou dispersion dans des conditions de pression normales, afin de minimiser la sédimentation des protéines pendant l'émulsification et d'augmenter la teneur de ladite protéine végétale capable d'émulsionner une huile ;
(iv) ajouter une huile à ladite solution ou dispersion homogénéisée à haute pression, et homogénéiser le mélange ainsi obtenu pour former une émulsion ; et
(v) homogénéiser à haute pression ladite émulsion pour empêcher la séparation de l'huile pendant la fermentation ou le stockage de ladite émulsion,

à condition qu'un sucre soit ajouté soit à la solution ou dispersion aqueuse obtenue à l'étape (ii) avant l'étape (iii), soit en plus de ladite huile ajoutée à l'étape (iv).

**2.** Procédé selon la revendication 1, dans lequel l'émulsion homogénéisée est exempte de stabilisants.

**3.** Procédé selon la revendication 1, dans lequel :

(a) ladite solution ou dispersion aqueuse est préparée à l'étape (ii) par dissolution ou dispersion dudit concentré/isolat de protéines végétales dans l'eau ; ou
(b) l'huile ajoutée à l'étape (iv) est une huile végétarienne ; ou
(c) la quantité d'huile ajoutée à l'étape (iv) est déterminée de manière à ce que la concentration de ladite huile dans ladite émulsion homogénéisée soit égale ou supérieure à 5 % (poids/poids) ; ou
(d) ledit sucre est un hydrate de carbone permettant la fermentation par des bactéries fermentaires.

**4.** Procédé selon la revendication 1, dans lequel la quantité dudit concentré/isolat de protéine végétale dans ladite solution ou dispersion aqueuse préparée à l'étape (ii) est déterminée de telle sorte que la concentration de ladite protéine végétale dans ladite émulsion homogénéisée soit égale ou supérieure à 3 % (poids/poids).

**5.** Procédé selon la revendication 4, dans lequel la concentration de ladite protéine végétale dans ledit de l'émulsion homogénéisée est supérieure à 3 % (poids/poids), par exemple environ 4 %, 5 %, 6 %, 7 %, 8 %, 9 %,ou 10 % (poids/poids).

**6.** Procédé selon la revendication 3, dans lequel :

(a) ladite huile végétarienne est de l'huile de palme, de l'huile de coco, de l'huile de canola, de l'huile de soja, de l'huile de tournesol, de l'huile d'olive, de l'huile de graine de colza, de l'huile de graine de coton, de l'huile de sésame, de l'huile d'avocat, ou une combinaison de celles-ci ; ou
(b) la concentration de ladite huile dans ladite émulsion homogénéisée est supérieure à 5 % (poids/poids), par exemple environ 6 %, 7 %, 8 %, 9 % ou 10 % (poids/poids) ; ou

(c) ledit hydrate de carbone est du glucose ou du fructose.

**7.** Procédé selon la revendication 1, dans lequel le sucre est ajouté à la solution ou à la dispersion aqueuse obtenue à l'étape (ii) avant l'étape (iii).

**8.** Procédé selon la revendication 1, dans lequel le sucre est ajouté avec ladite l'huile à l'étape (iv).

**9.** Procédé selon la revendication 1, dans lequel :

(a) un substitut de sucre (édulcorant artificiel) est ajouté soit à la solution ou à la dispersion aqueuse obtenue à l'étape (ii) avant l'étape (iii), ou avec ladite huile à l'étape (iv) ; ou
(b) un probiotique et/ou un composé favorisant la santé est ajouté à la solution ou à la dispersion aqueuse obtenue à l'étape (ii) avant l'étape (iii), ou en avec ladite huile à l'étape (iv).

**10.** Procédé selon la revendication 9, dans lequel le composé favorable à la santé est un composé prébiotique, un colorant, une bétalaïne, un antioxydant, un caroténoïde, une vitamine lipophile ou un polyphénol.

**11.** Procédé selon la revendication 1, dans lequel :

(a) l'homogénéisation à haute pression à l'étape (iii) est effectuée sous une pression dans un intervalle de 50-400 ou 50-200 mégapascal (MPa) ; ou
(b) l'homogénéisation à haute pression à l'étape (v) est effectuée sous une pression comprise dans un intervalle de 50-400 ou 50-200 mégapascal (MPa).

**12.** Procédé selon la revendication 1, dans lequel les étapes (iv) et (v) sont réalisées en une seule étape.

**13.** Procédé selon l'une des revendications 1 à 12, pour la fabrication d'un substitut de yaourt ou de boisson au yaourt, comprenant en outre les étapes suivantes :

(vi) inoculer l'émulsion homogénéisée à haute pression avec une bactérie d'acide lactique ; et
(vii) fermenter l'émulsion homogénéisée à haute pression ainsi inoculée pour obtenir ledit substitut de yaourt ou de boisson au yaourt.

**14.** Procédé selon la revendication 13, dans lequel :

(a) l'émulsion homogénéisée à haute pression est inoculée à l'étape (vi) avec lesdites bactéries d'acide lactique pour obtenir une concentration finale de $10^5$-$10^7$ unités formatrices de colonies par gramme d'émulsion ; ou
(b) un probiotique et/ou un composé bénéfique pour la santé, tel qu'un composé prébiotique, un colorant, une bétalaïne, un antioxydant, un caroténoïde, une vitamine lipophile ou un polyphénol, est ajouté à l'émulsion homogénéisée à haute pression en même temps que lesdites bactéries d'acide lactique ; ou
(c) l'émulsion homogénéisée à haute pression inoculée est fermentée à l'étape (vii) jusqu'à l'obtention d'un pH final compris entre 3,7 et 4,5, et d'une concentration finale d'au moins $5.10^7$ à $5.10^9$ d'unités formatrices de colonies desdites bactéries d'acide lactique par gramme d'émulsion ; ou
(d) l'émulsion homogénéisée à haute pression inoculée est fermentée à une température, ou dans une plage de températures, compatible avec lesdites bactéries d'acide lactique, inférieure à celles compatibles avec lesdites bactéries d'acide lactique, ou supérieure à celles compatibles avec lesdites bactéries d'acide lactique.

**15.** Procédé selon l'une des revendications 1 à 12, pour la fabrication d'un substitut de lait aigre, d'une crème aigre, d'un yaourt, d'un fromage à pâte dure ou mi-dure, d'un kéfir, d'un lait de beurre ou d'une crème glacée ou d'un produit intermédiaire pour leur préparation, comprenant en outre les étapes suivantes :

(vi) inoculer l'émulsion homogénéisée à haute pression avec une bactérie choisie parmi *Lactobacillus, Leuconostoc, Pediococcus, Propionibacterium, Streptococcus, Bifidobacterium,* ou *Acetobacter,* une levure fermentant le lactose ; ou un champignon du genre *Saccharomyces,* et
(vii) fermenter l'émulsion homogénéisée à haute pression ainsi inoculée pour obtenir le substitut de lait aigre, de crème aigre, de yaourt, de fromage à pâte dure ou mi-dure, de kéfir, de lait de beurre ou de crème glacée, ou le produit intermédiaire nécessaire à leur préparation.

**16.** Emulsion homogénéisée pour la préparation d'un substitut de produit laitier fermenté, obtenue par le procédé selon l'une quelconque des revendications 1 à 12.

**17.** Emulsion selon la revendication 16, dans laquelle la concentration de ladite protéine végétale dans ladite émulsion est égale ou supérieure à 3 % (poids/poids) ; et/ou la concentration de ladite huile dans ladite émulsion est égale ou supérieure à 5 % (poids/poids).

**18.** Substitut de yaourt ou de boisson au yaourt obtenu par le procédé selon l'une des revendications 13 ou 14.

**19.** Substitut de yaourt ou de boisson au yaourt selon la revendication 18, dans lequel :

(a) la concentration de ladite protéine végétale dans ledit substitut de yaourt ou de boisson au yaourt est égale ou supérieure à 3 % (poids/poids) ; et/ou la concentration de ladite huile dans ledit substitut de yaourt ou de boisson au yaourt est égale ou supérieure à 5 % (poids/poids) ; ou
(b) ledit substitut de yaourt ou de boisson au yaourt a un pH compris entre 3,7 et 4,5 et une concentration d'au moins $5.10^7$ à $5.10^9$ d'unités formatrices de colonies desdites bactéries d'acide lactique par gramme.

**20.** Substitut de lait aigre, de crème aigre, de yaourt, de fromage à pâte dure ou mi-dure, de kéfir, de lait de beurre ou de crème glacée, ou un produit intermédiaire pour leur préparation, obtenu par le procédé de la revendication 15.

# Fig. 1

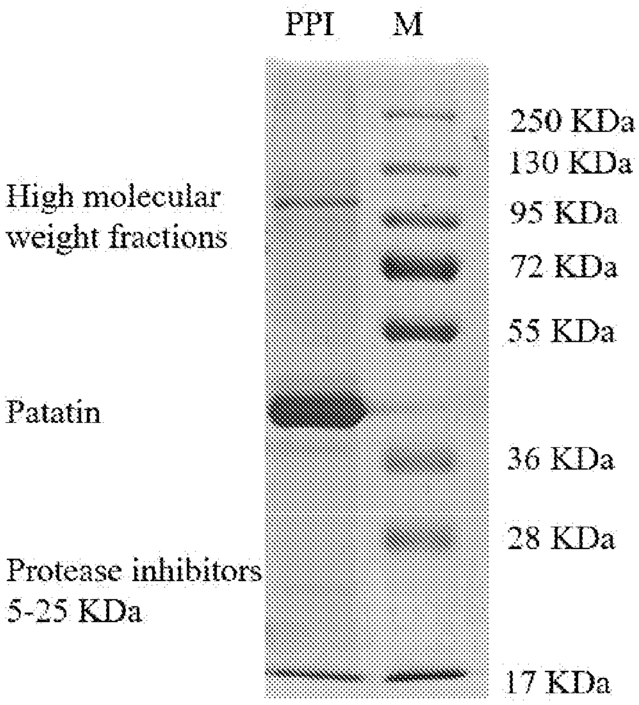
PPI
M
250 KDa
130 KDa
95 KDa
72 KDa
55 KDa
36 KDa
28 KDa
17 KDa
High molecular weight fractions
Patatin
Protease inhibitors 5-25 KDa

# Fig. 2A

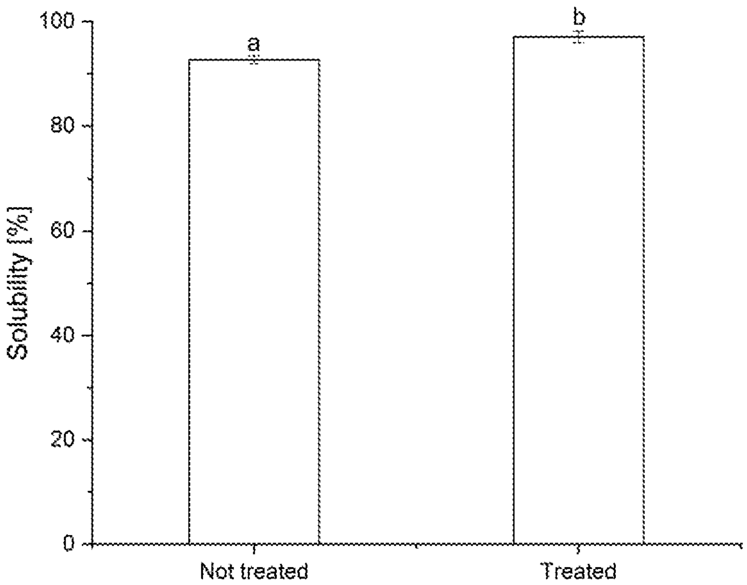
Solubility [%]
0
20
40
60
80
100
a
b
Not treated
Treated

Fig. 2B

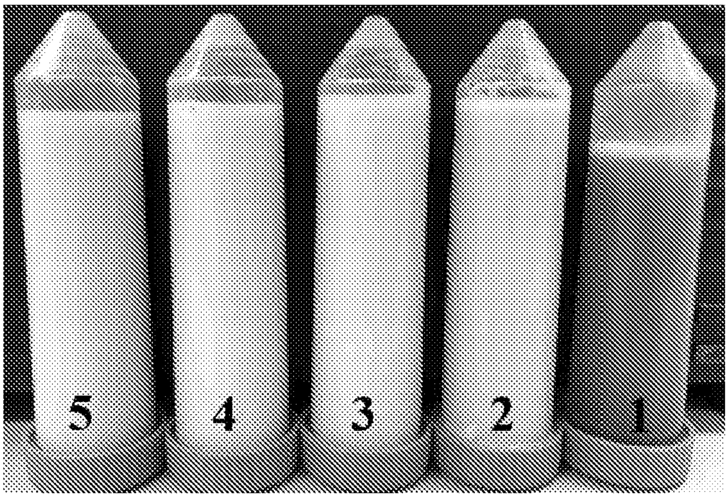


Fig. 2C

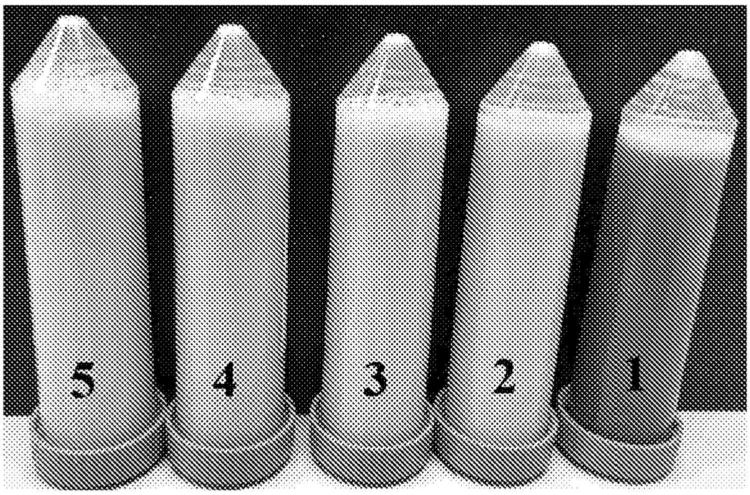

Fig. 3A

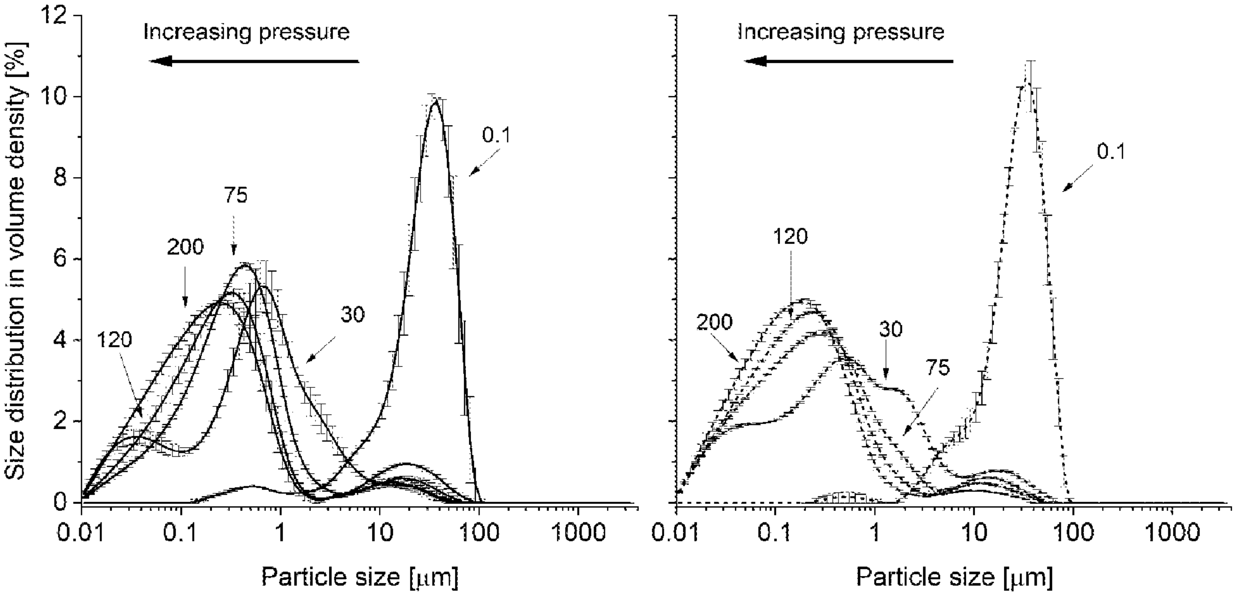
Size distribution in volume density [%]
Increasing pressure
Increasing pressure
0.1
75
200
30
120
0.1
120
200
30
75
Particle size [μm]
Particle size [μm]

Fig. 3B

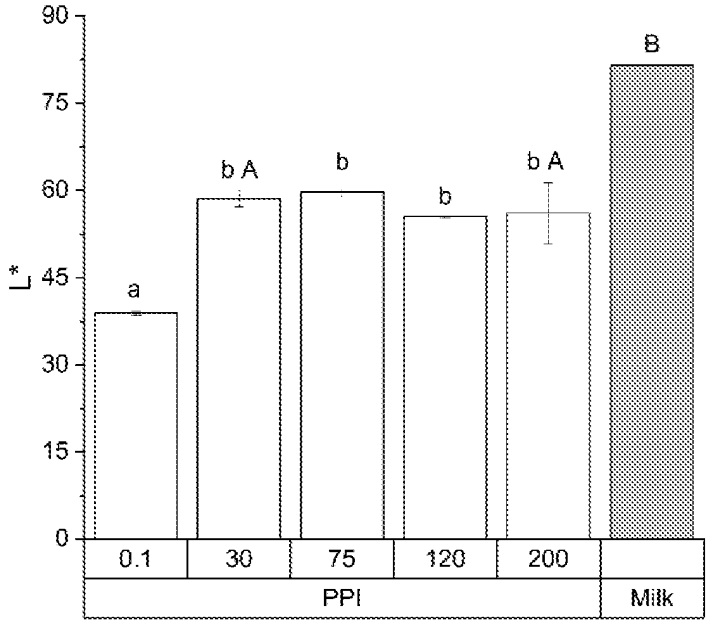
L*
a
b A
b
b
b A
B
0.1
30
75
120
200
PPI
Milk

**Fig. 4A**

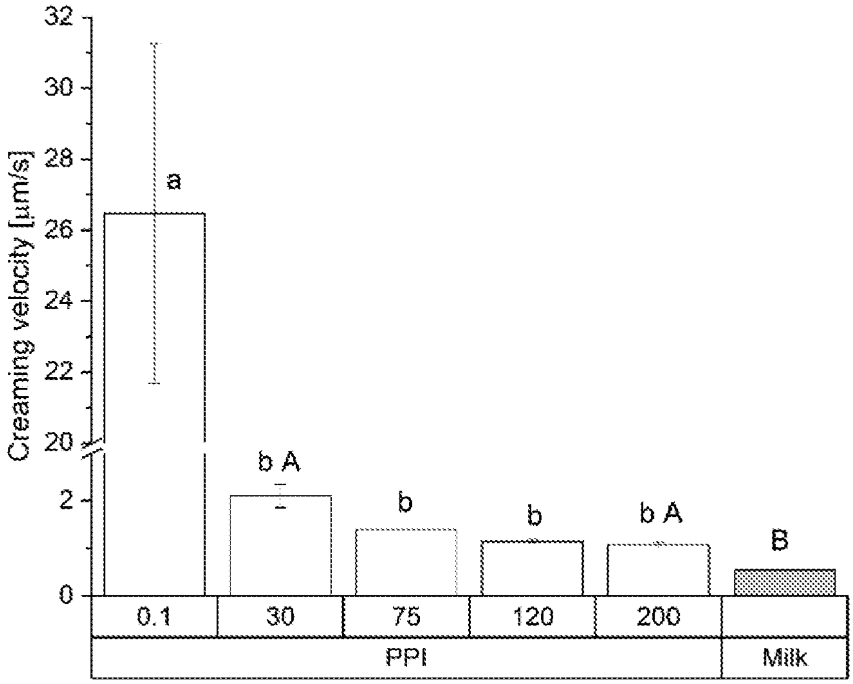
Creaming velocity [µm/s]
32
30
28
26
24
22
20
2
0
a
b A
b
b
b A
B
0.1
30
75
120
200
PPI
Milk

**Fig. 4B**

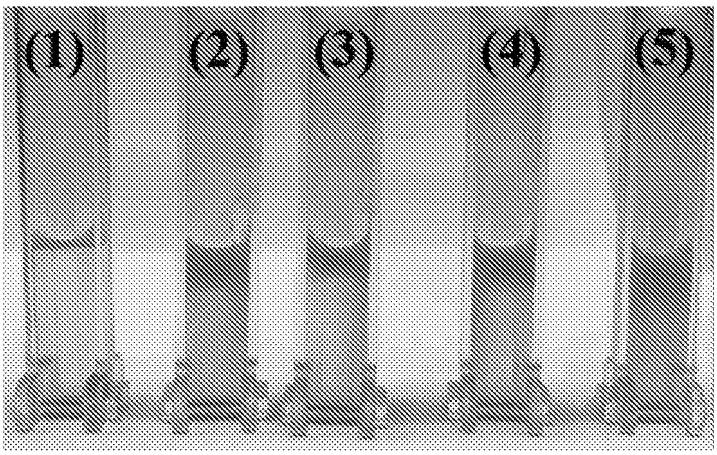
(1)
(2)
(3)
(4)
(5)

# Fig. 5A

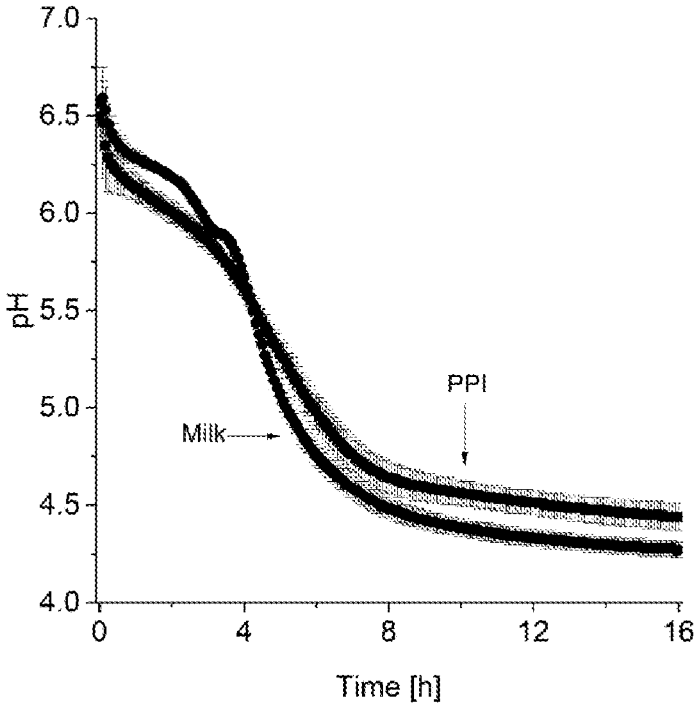
7.0
6.5
6.0
5.5
5.0
4.5
4.0
pH
0
4
8
12
16
Time [h]
PPI
Milk

# Fig. 5B

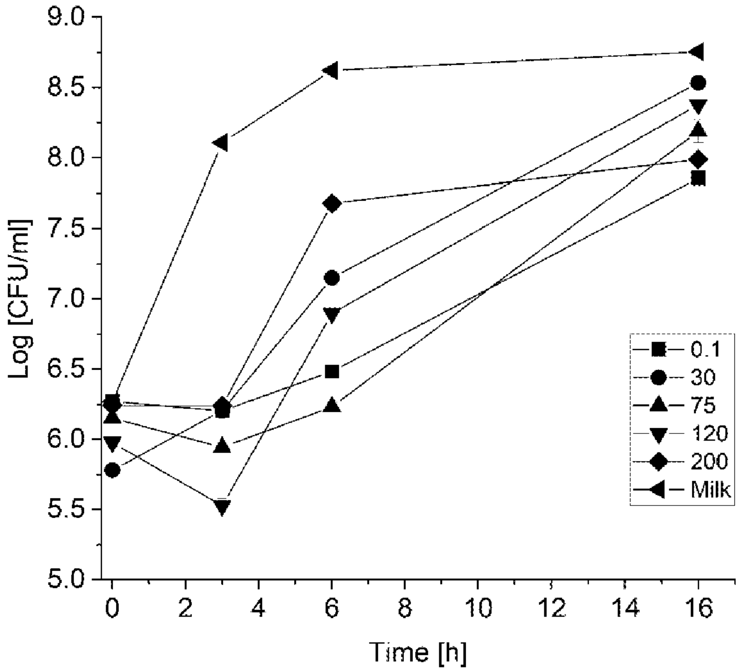
9.0
8.5
8.0
7.5
7.0
6.5
6.0
5.5
5.0
Log [CFU/ml]
0
2
4
6
8
10
12
14
16
Time [h]
0.1
30
75
120
200
Milk

Fig. 6

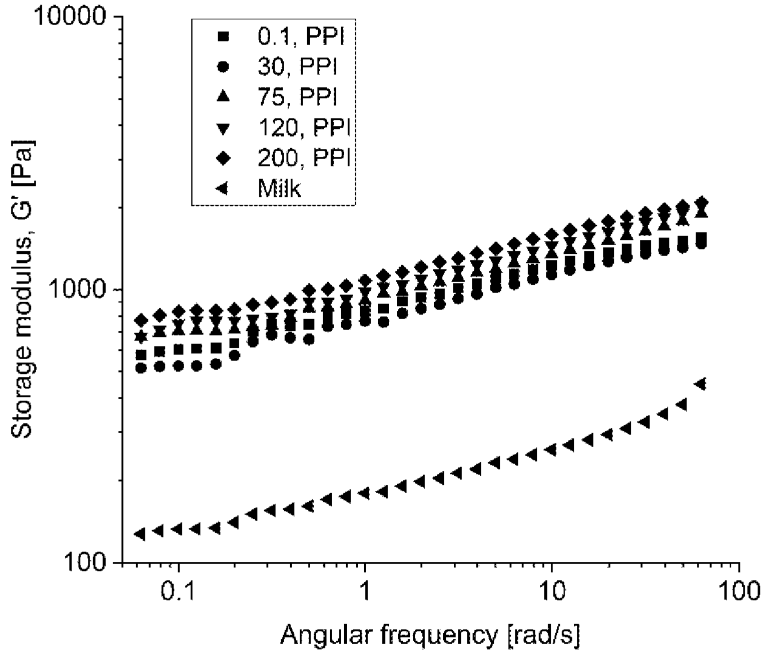

10000
1000
100
Storage modulus, G' [Pa]
0.1, PPI
30, PPI
75, PPI
120, PPI
200, PPI
Milk
0.1
1
10
100
Angular frequency [rad/s]


Fig. 7A

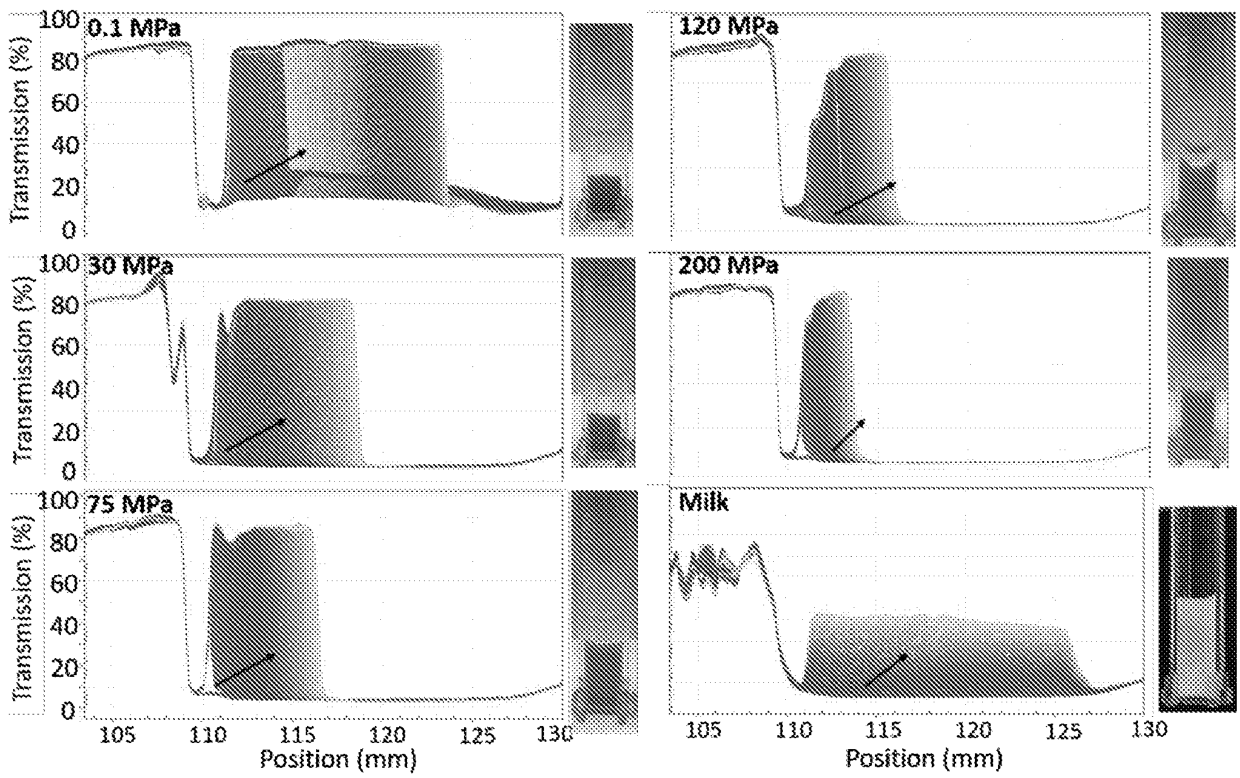

0.1 MPa
30 MPa
75 MPa
120 MPa
200 MPa
Milk
Transmission (%)
100
80
60
40
20
0
105
110
115
120
125
130
Position (mm)

Fig. 7B

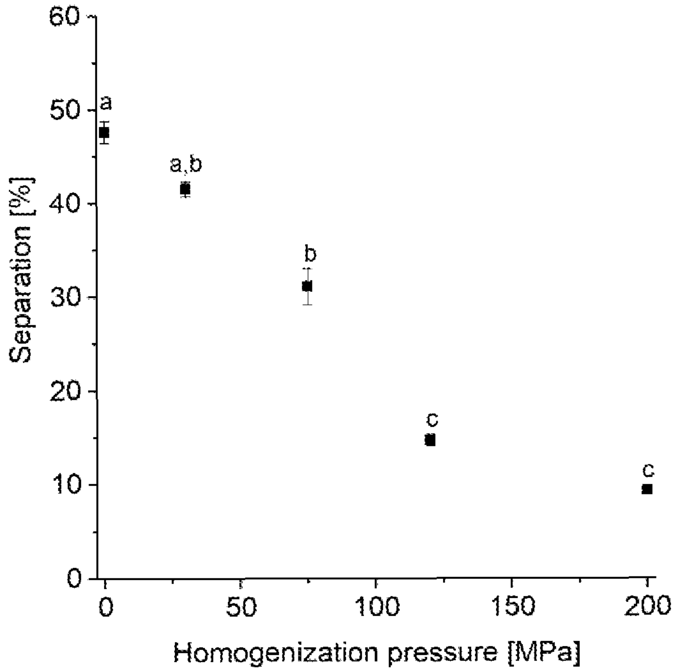
60
50
40
30
20
10
0
Separation [%]
a
a,b
b
c
c
0
50
100
150
200
Homogenization pressure [MPa]

Fig. 8A

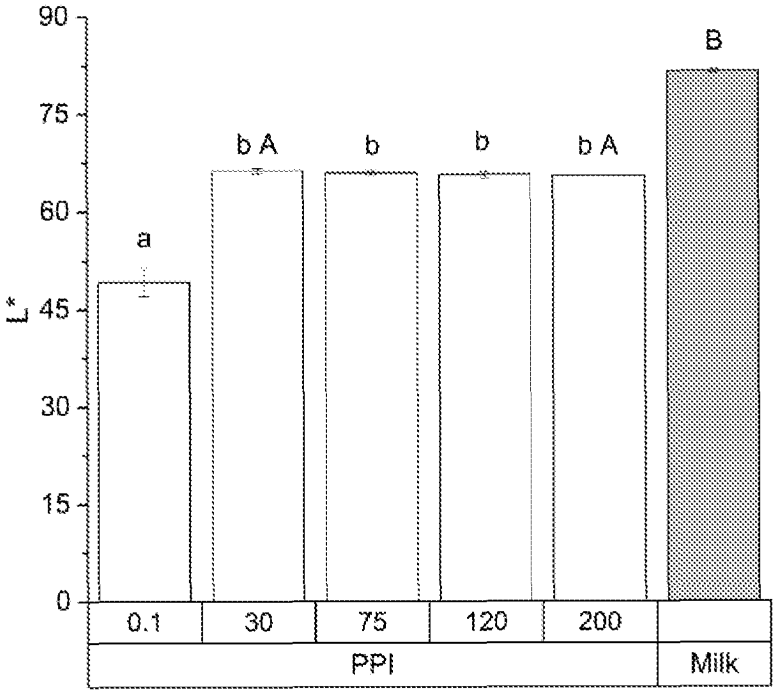
90
75
60
45
30
15
0
L*
a
b A
b
b
b A
B
0.1
30
75
120
200
PPI
Milk

Fig. 8B

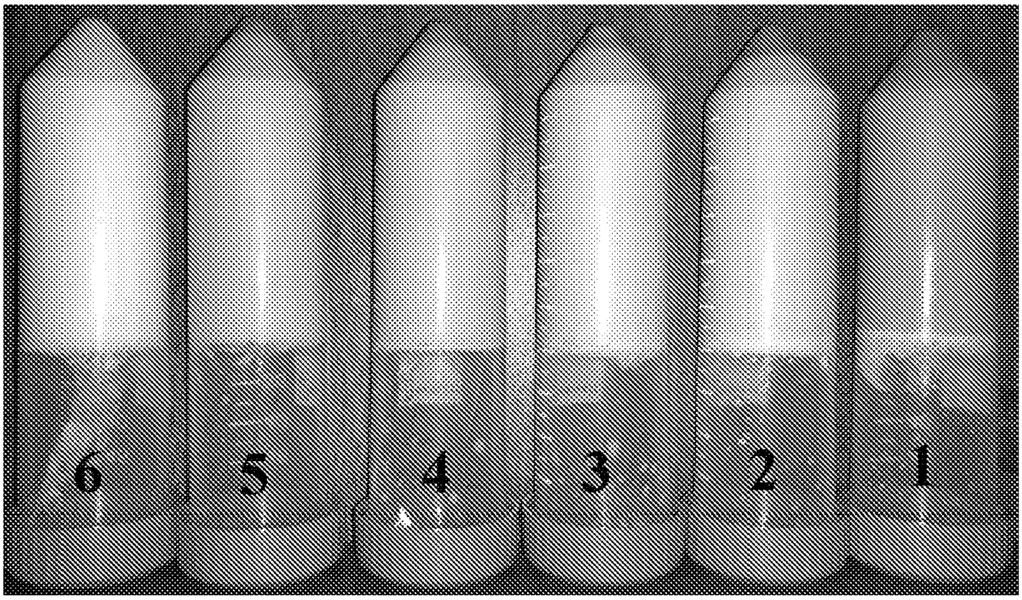


Fig. 8C

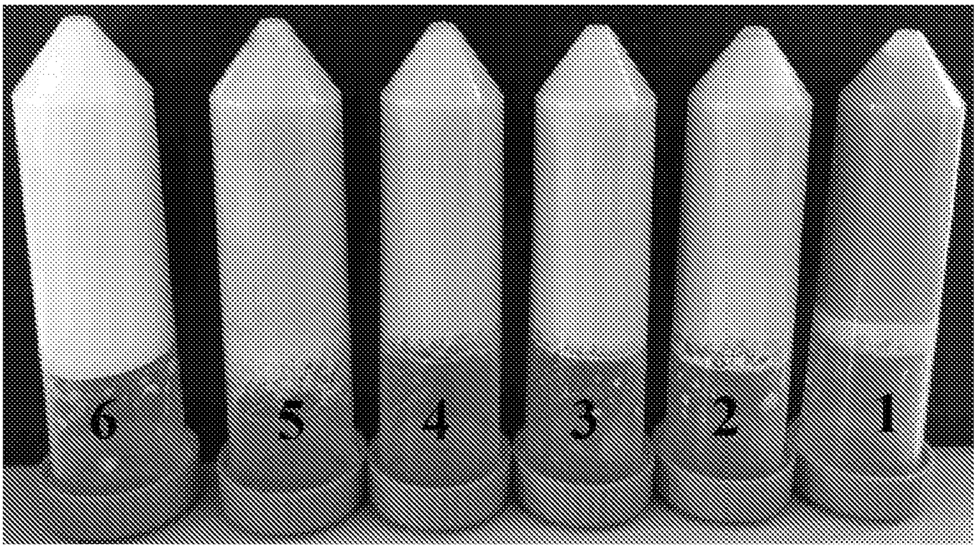

Fig. 9A

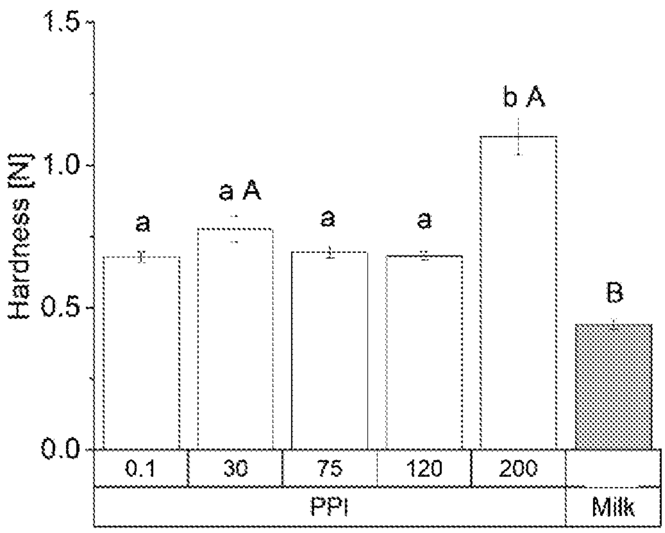
Hardness [N]
1.5
1.0
0.5
0.0
b A
a A
a
a
a
B
0.1
30
75
120
200
PPI
Milk

Fig. 9B

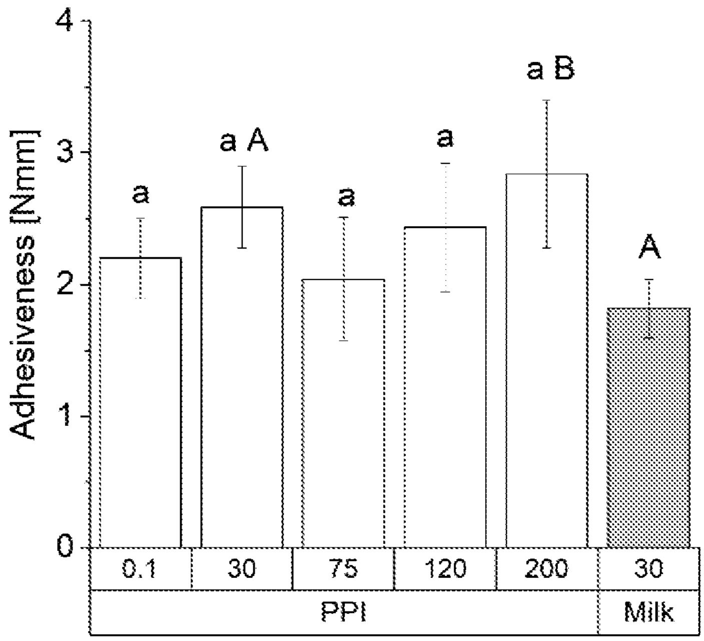
Adhesiveness [Nmm]
4
3
2
1
0
a B
a A
a
a
a
A
0.1
30
75
120
200
30
PPI
Milk

Fig. 9C

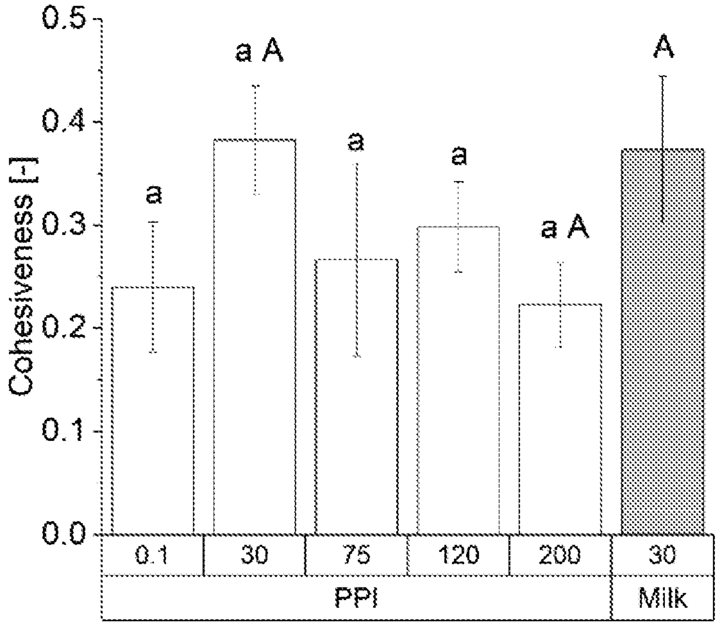
Cohesiveness [-]
0.5
0.4
0.3
0.2
0.1
0.0
a
a A
a
a
a A
A
0.1
30
75
120
200
30
PPI
Milk

Fig. 10

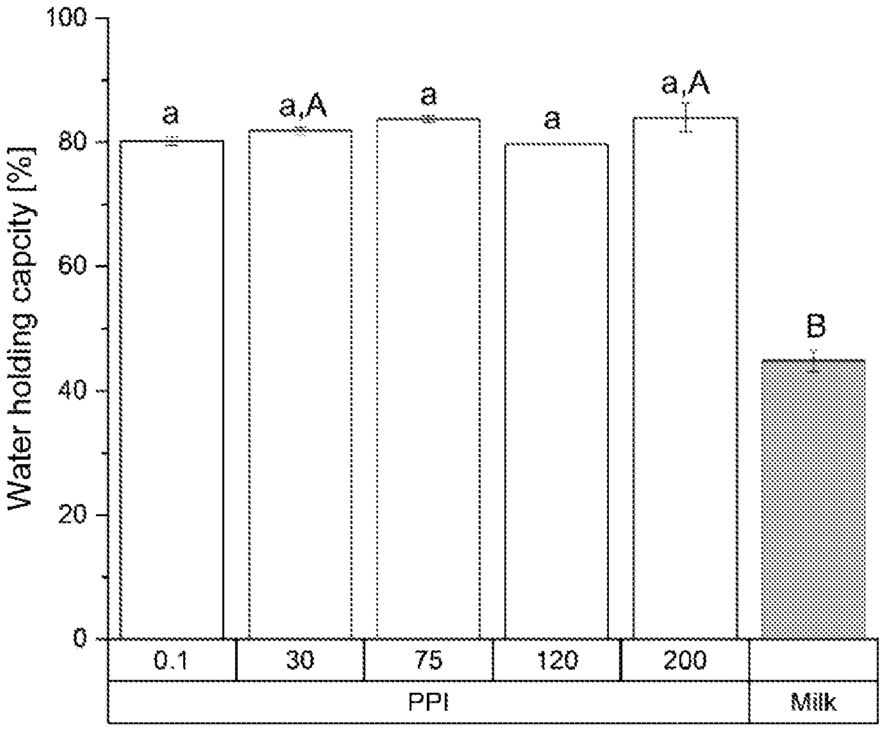
Water holding capcity [%]
100
80
60
40
20
0
a
a,A
a
a
a,A
B
0.1
30
75
120
200
PPI
Milk

Fig. 11A

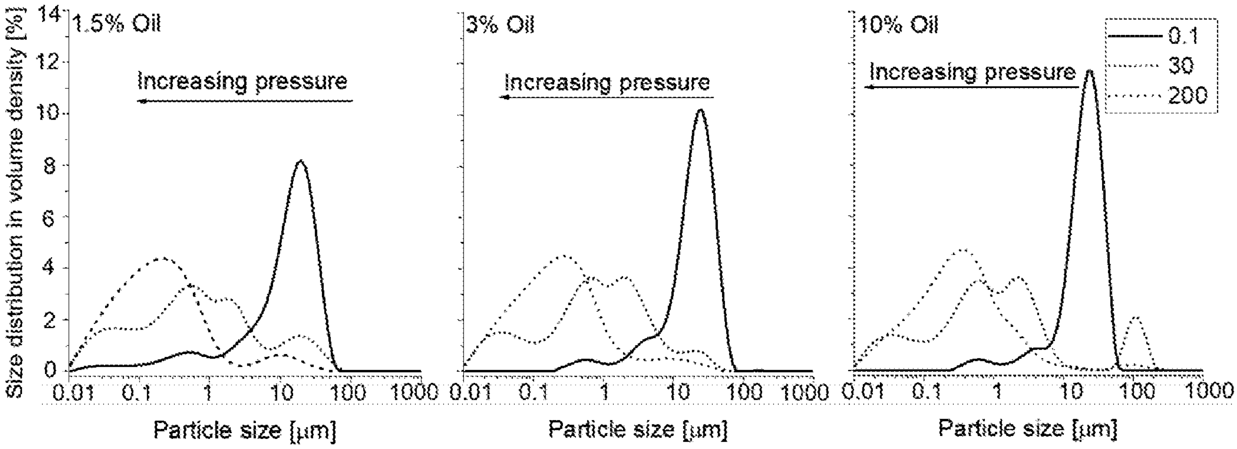


Fig. 11B

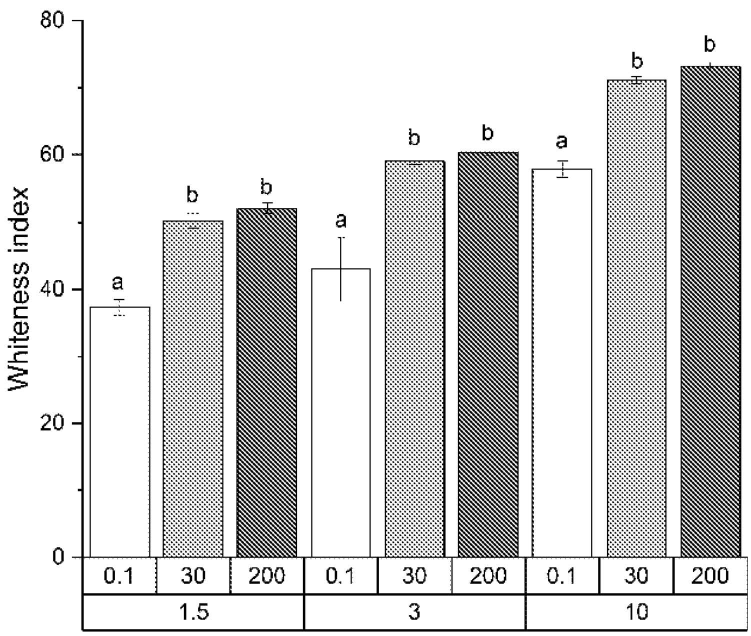

Fig. 12A

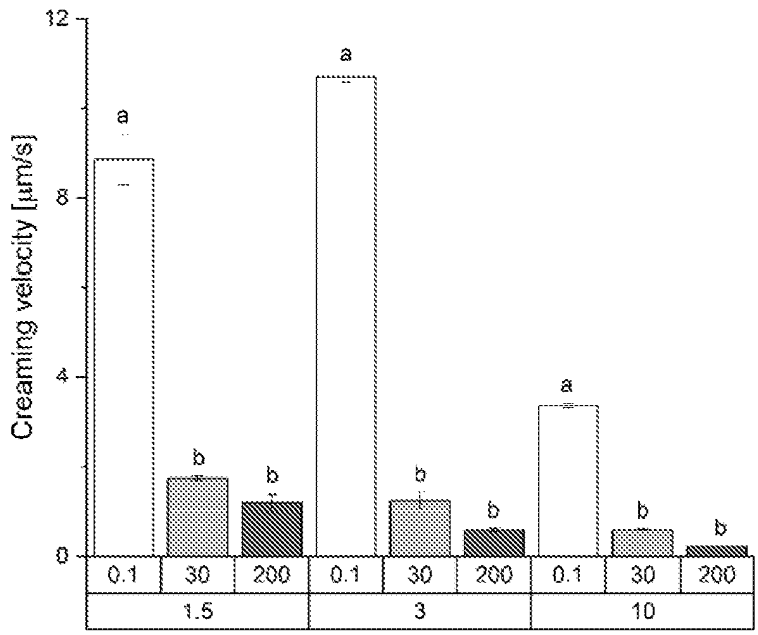


Fig. 12B

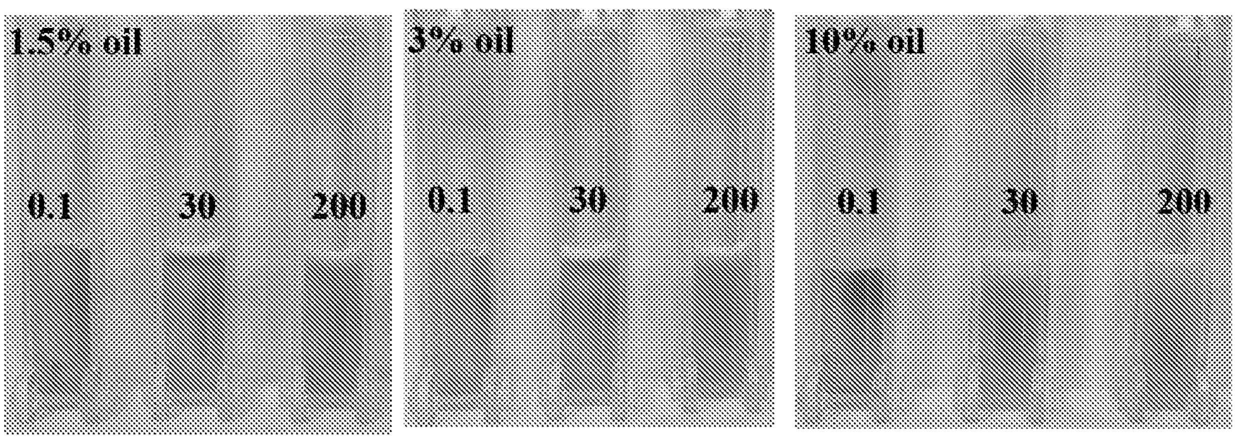

Fig. 13A

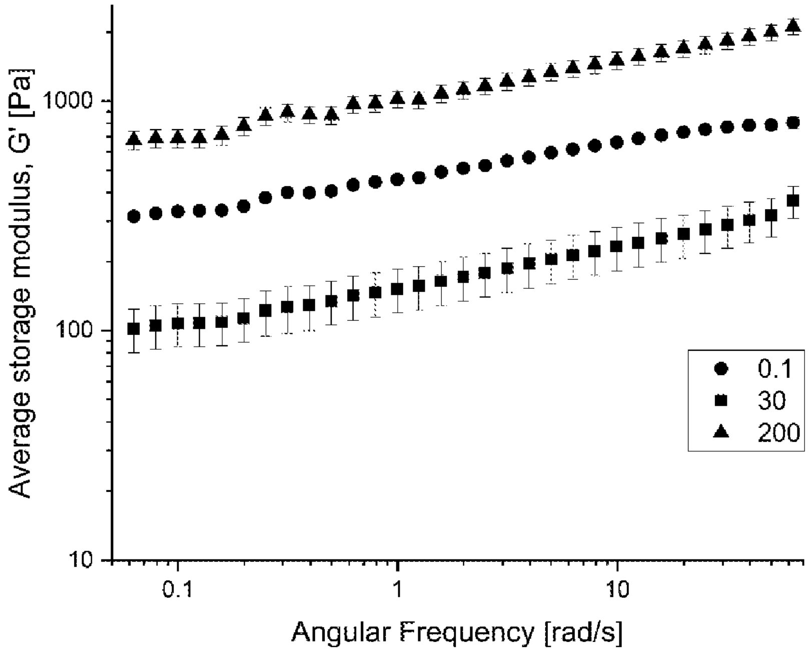


Fig. 13B

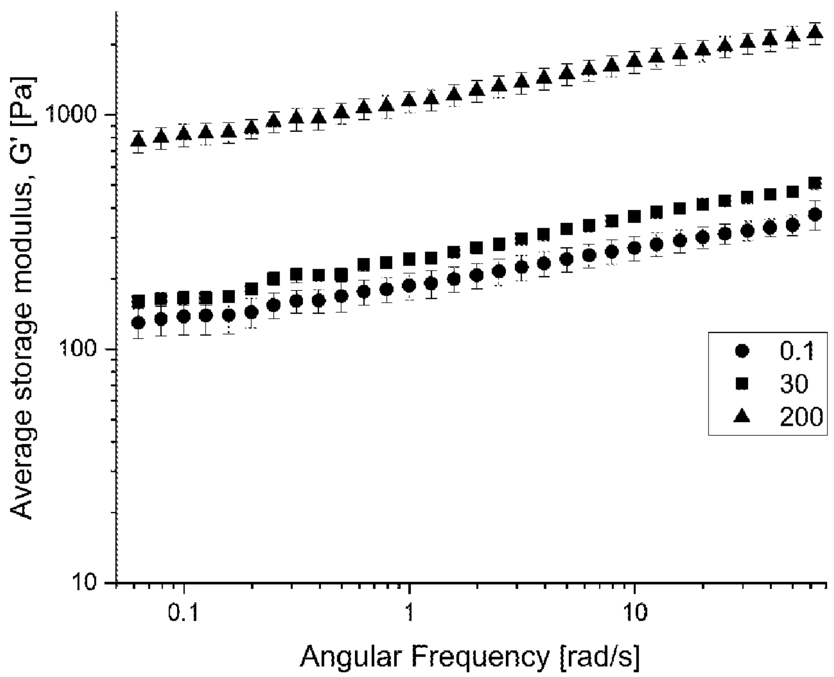

Fig. 13C

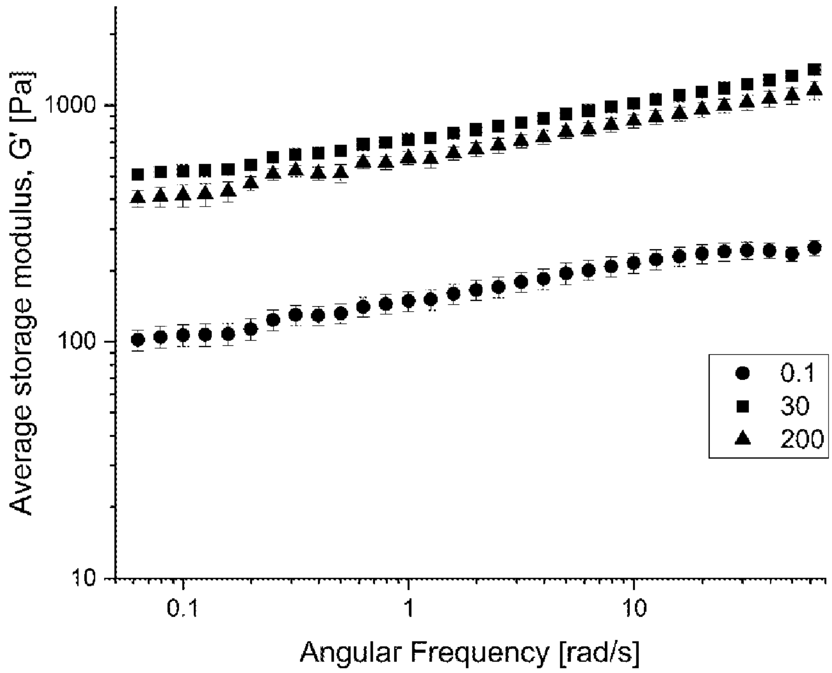


Fig. 13D

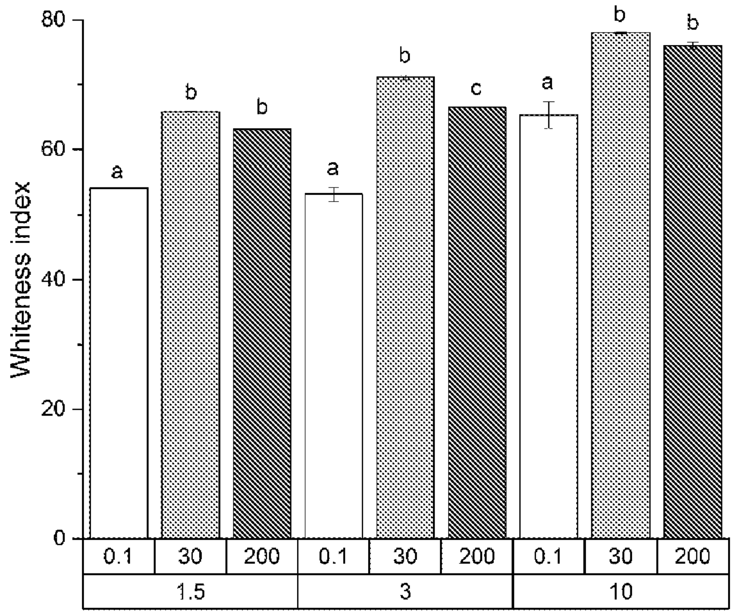

**Fig. 14**

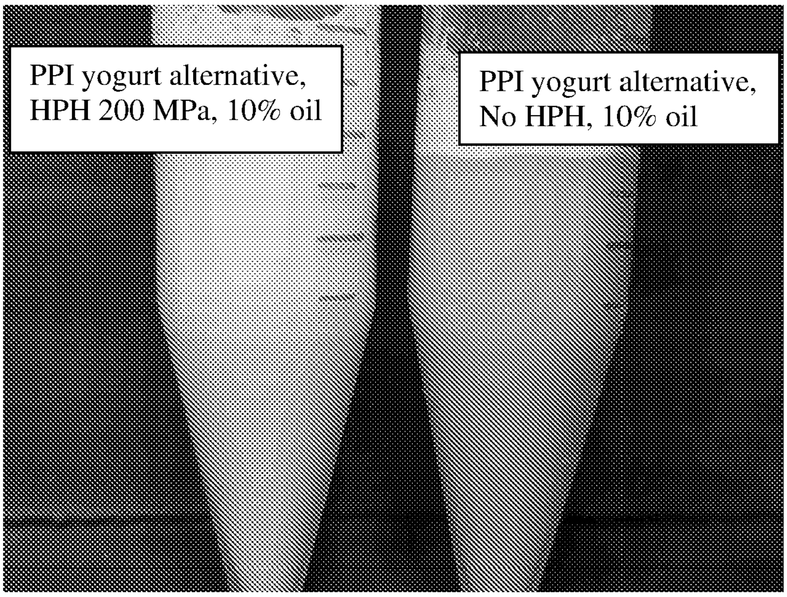
PPI yogurt alternative,
HPH 200 MPa, 10% oil
PPI yogurt alternative,
No HPH, 10% oil

**Fig. 15**

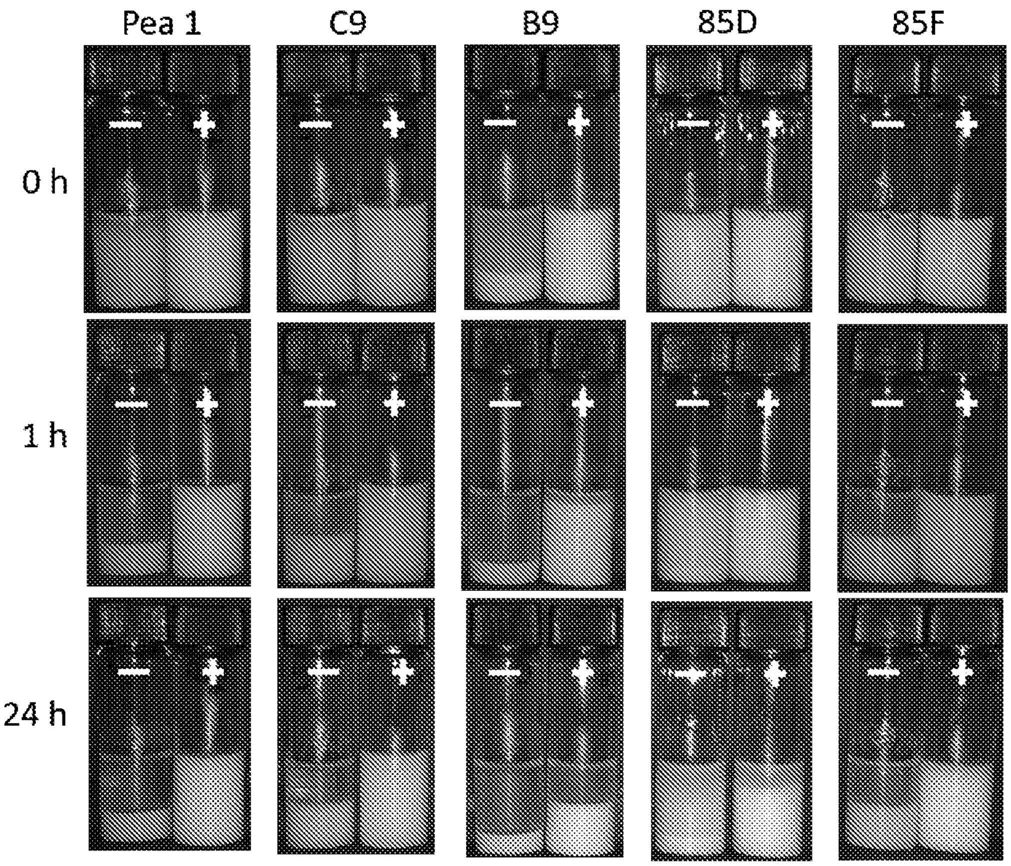
Pea 1
C9
B9
85D
85F
0 h
1 h
24 h

# Fig. 16A

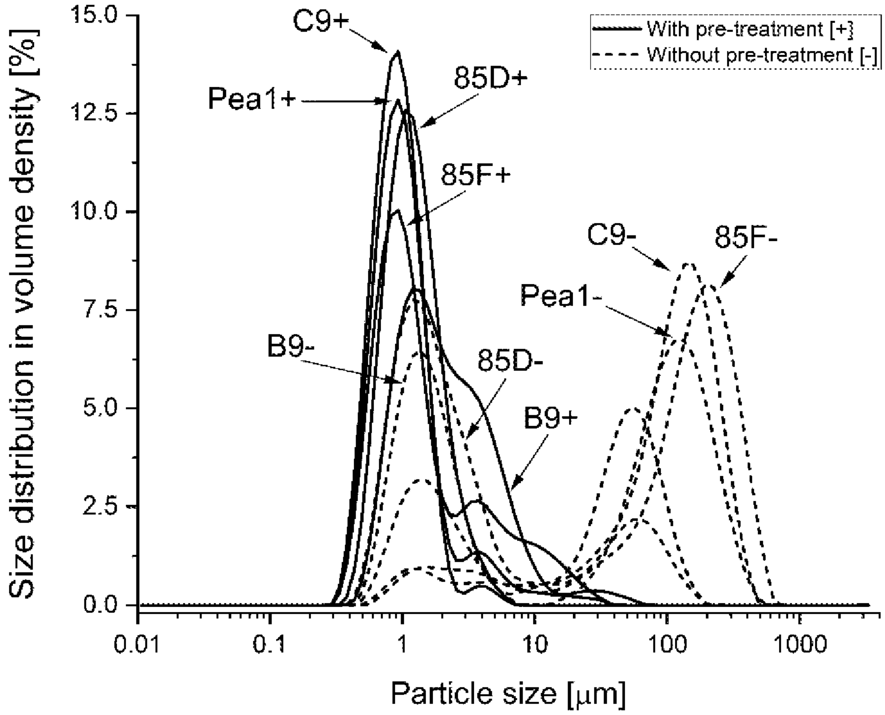


# Fig. 16B

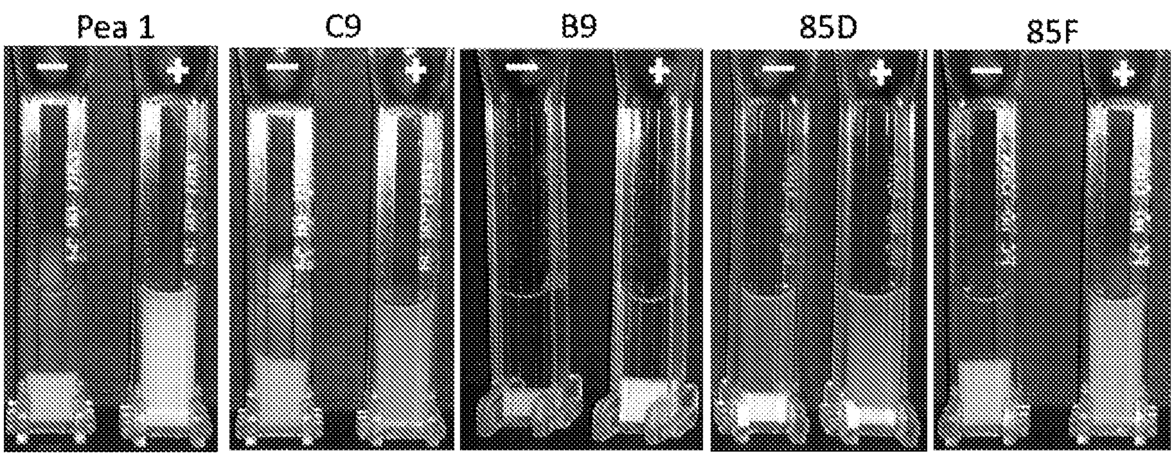

# Fig. 17

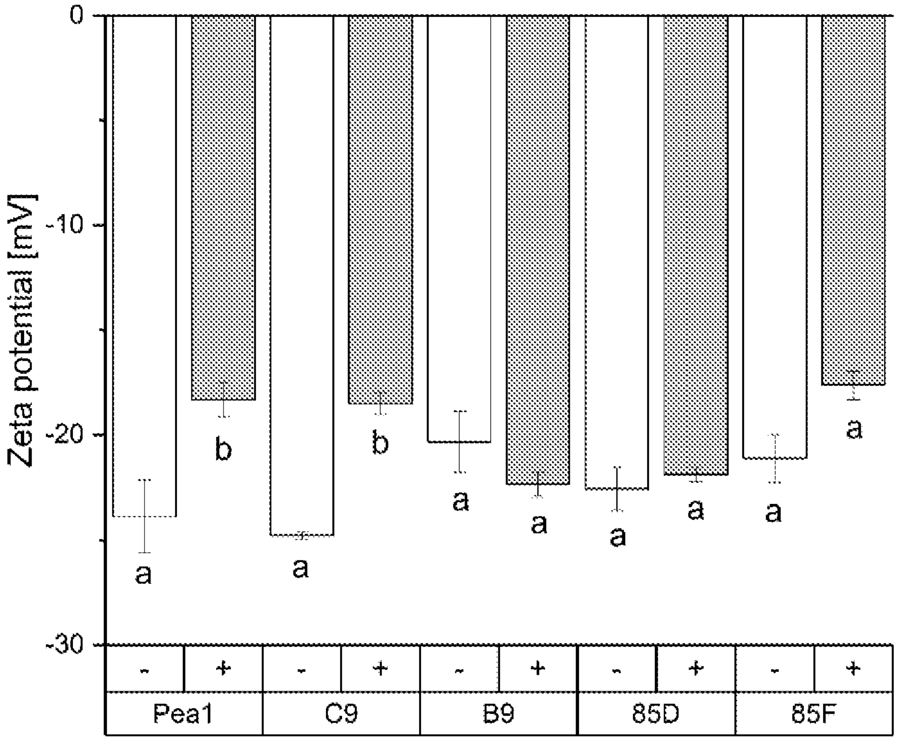

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 108967550 A
- WO 2018075589 A1


### Non-patent literature cited in the description


- **BADE et al.** Can protein functionalities be enhanced by high-pressure homogenization. *A study on functional properties of lupin proteins*, 2011
- **AROGUNDADE, L.A.** ; **MU, T.H.** ; **AÑÓN, M.C**. eat-induced gelation properties of isoelectric and ultrafiltered sweet potato protein isolate and their gel microstructure. *Food Research International,*, 2012, vol. 49 (1), 216-225
- Influence of sugar substitute in rheology of fruit gel. **BASU, S.** ; **SHIVHARE, U.S** ; **CHAKRABORTY, P**. In Advances in Food Rheology and Its Applications. Elsevier Inc, 2017, 355-376
- **BOUAOUINA, H.** ; **DESRUMAUX, A** ; **LOISEL, C** ; **LEGRAND, J**. Functional properties of whey proteins as affected by dynamic high-pressure treatment. *International Dairy Journal,*, 2006, vol. 16 (4), 275-284
- **BRADFORD, M.M.** A rapid and sensitive method for the quantitation of microgram quantities of protein utilizing the principle of protein-dye binding.. *Analytical Biochemistry*, 1976, vol. 72 (1-2), 248-254
- **BRANDT, K** ; **CHRISTENSEN, L.P** ; **HANSEN-MØLLER, J.** ; **HANSEN, S.L** ; **HARALDSDOTTIR, J.** ; **JESPERSEN, L.** ; **PURUP, S** ; **KHARAZMI, A** ; **BARKHOLT, V.** ; **FRØKIÆR, H**. Health promoting compounds in vegetables and fruits: a systematic approach for identifying plant components with impact on human health. *Trends in Food Science and Technology*, 2004, vol. 15 (7-8), 384-393
- **BRÜCKNER-GÜHMANN, M** ; **VASIL'EVA, E.** ; **CULETU, A** ; **DUTA, D** ; **SOZER, N** ; **DRUSCH, S.** Oat protein concentrate as alternative ingredient for non-dairy yoghurt-type product. *Journal of the Science of Food and Agriculture*, 2019, vol. 99 (13), 5852-5857
- **CHANDRA, M.V.** ; **SHAMASUNDAR, B.A.** Texture profile analysis and functional properties of gelatin from the skin of three species of fresh water fish. *International Journal of Food Properties*, 2015, vol. 18 (3), 572-584
- **CHANG, S.K.C** ; **ZHANG, Y.** Protein analysis. *Food Analysis*, 2017, 315-331
- **CREUSOT, N** ; **WIERENGA, P.A** ; **LAUS, M.C** ; **GIUSEPPIN, M.L.F** ; **GRUPPEN, H**. Rheological properties of patatin gels compared with β-lactoglobulin, ovalbumin, and glycinin. *ournal of the Science of Food and Agriculture*, 2011, vol. 91 (2), 253-261
- **CRUZ, N** ; **CAPELLAS, M** ; **HERNÁNDEZ, M.** ; **TRUJILLO, A.J.** ; **GUAMIS, B** ; **FERRAGUT, V**. Ultra high pressure homogenization of soymilk: Microbiological, physicochemical and microstructural characteristics. *Food Research International,*, 2007, vol. 40 (6), 725-732
- **CRUZ, N** ; **CAPELLAS, M.** ; **JARAMILLO, D.P.** ; **TRUJILLO, A.J** ; **GUAMIS, B.** ; **FERRAGUT, V.** Soymilk treated by ultra high-pressure homogenization: acid coagulation properties and characteristics of a soy-yogurt product. *Food Hydrocolloids*, 2009, vol. 23 (2), 490-496
- **DOUCET, D.** ; **GAUTHIER, S.F** ; **FOEGEDING, E.A.** Rheological characterization of a gel formed during extensive enzymatic hydrolysis. *Journal of Food Science*, 2001, vol. 66 (5), 711-715
- **DURAND, A** ; **FRANKS, G.V** ; **HOSKEN, R.W**. Particle sizes and stability of UHT bovine, cereal and grain milks. *Food Hydrocolloids*, 2003, vol. 17 (5), 671-678
- **FERRAGUT, V.** ; **CRUZ, N.S.** ; **TRUJILLO, A** ; **GUAMIS, B** ; **CAPELLAS, M**. Physical characteristics during storage of soy yogurt made from ultra-high pressure homogenized soymilk. *Journal of Food Engineering*, 2009, vol. 92 (1), 63-69
- **GABRIELE, D.** ; **DE CINDIO, B.** ; **D'ANTONA, P.** A weak gel model for foods. *Rheologica Acta*, 2001, vol. 40, 120-127
- **GLUSAC, J.** ; **DAVIDESKO-VARDI, I** ; **ISASCHAR-OVDAT, S.** ; **KUKAVICA, B.** ; **FISHMAN, A**. Gel-like emulsions stabilized by tyrosinase-crosslinked potato and zein proteins. *Food Hydrocolloids*, 2018, vol. 82, 53-63
- **GLUSAC, J.** ; **ISASCHAR-OVDAT, S** ; **KUKAVICA, B** ; **FISHMAN, A.** Oil-in-water emulsions stabilized by tyrosinase-crosslinked potato protein. *Food Research International*, 2017, vol. 100, 407-415

- **GRASSO, N** ; **ALONSO-MIRAVALLES, L** ; **O'MAHONY, J.A.** Composition, physicochemical and sensorial properties of commercial plant-based yogurts. *Foods*, 2020, vol. 9 (3), 252
- **GROBBEN, G.J** ; **VAN CASTEREN, W.H.M.** ; **SCHOLS, H.A.** ; **OOSTERVELD, A** ; **SALA, G** ; **SMITH, M. R** ; **SIKKEMA, J.** ; **BONT, J.A.M.** Analysis of the exopolysaccharides produced by Lactobacillus delbrueckii subsp. bulgaricus NCFB 2772 grown in continous culture on glucose and fructose. *Applied Microbiology and Biotechnology*, 1997, vol. 48 (4), 516-521
- **GRYGORCZYK, A** ; **CORREDIG, M**. Acid induced gelation of soymilk, comparison between gels prepared with lactic acid bacteria and glucono-δ-lactone. *Food Chemistry,*, 2013, vol. 141 (3), 1716-1721
- **GUNASEKARAN, S.** ; **AK, M.M**. Dynamic oscillatory shear testing of foods - selected applications. *Trends in Food Science and Technology,*, 2000, vol. 11 (3), 115-127
- **GURSEL, A.** ; **GURSOY, A** ; **ANLI, E.A.K.** ; **BUDAK, S.O.** ; **AYDEMIR, S.** ; **DURLU-OZKAYA, F**. Role of milk protein-based products in some quality attributes of goat milk yogurt. *Journal of Dairy Science*, 2016, vol. 99 (4), 2694-2703
- **HICKISCH, A.** ; **BEER, R.** ; **VOGEL, R.F** ; **TOELSTEDE, S**. Influence of lupin-based milk alternative heat treatment and exopolysaccharide-producing lactic acid bacteria on the physical characteristics of lupin-based yogurt alternatives. *Food Research International*, 2016, vol. 84, 180-188
- **KLOST, M.** ; **DRUSCH, S.** Structure formation and rheological properties of pea protein-based gels. *Food Hydrocolloids*, 2019, vol. 94, 622-630
- **KOCHER, P.N.** ; **FOEGENDING, E.A**. Microcentrifuge-based method for measuring water-holding of protein gels. *Journal of Food Science*, 1993, vol. 58 (5), 1040-1046
- **LORUSSO, A.** ; **CODA, R** ; **MONTEMURRO, M** ; **RIZZELLO, C.G.** Use of selected lactic acid bacteria and quinoa flour for manufacturing novel yogurt-like beverages. *Foods*, 2018, vol. 7 (4), 51
- **LUCEY, J.A** ; **TAMEHANA, M.** ; **SINGH, H.** ; **MUNRO, P.A.** A comparison of the formation, rheological properties and microstructure of acid skim milk gels made with a bacterial culture or glucono-δ-lactone. *Food Research International*, 1998, vol. 31 (2), 147-155
- **MÅRTENSSON, O** ; **ÖSTE, R** ; **HOLST, O**. Lactic acid bacteria in an oat-based non-dairy milk substitute: fermentation characteristics and exopolysaccharide formation. *LWT - Food Science and Technology*, 2000, vol. 33 (8), 525-530
- **MASSOUD, R.** ; **BELGHEISI, S** ; **MASSOUD, A.** Effect of high pressure homogenization on improving the quality of milk and sensory properties of yogurt: a review. *International Journal of Chemical Engineering and Applications*, 2016, vol. 7 (1), 66-70
- **MCLAREN, K.** ; **RIGG, B**. XII-the SDC recommended colour-difference formula: change to CIELAB. *Journal of the Society of Dyers and Colourists*, 1976, vol. 92 (9), 337-338
- **PAKSERESHT, S.** ; **MAZAHERI TEHRANI, M** ; **RAZAVI, S.M.A**. Optimization of low-fat set-type yoghurt: effect of altered whey protein to casein ratio, fat content and microbial transglutaminase on rheological and sensorial properties. *Journal of Food Science and Technology*, 2017, vol. 54 (8), 2351-2360
- **PELAES VITAL, A.C** ; **GOTO, P.A.** ; **HANAI, L.N** ; **GOMES-DA-COSTA, S.M** ; **DE ABREU FILHO, B.A.** ; **NAKAMURA, C.V.** ; **MATUMOTO-PINTRO, P.T**. Microbiological, functional and rheological properties of low fat yogurt supplemented with Pleurotus ostreatus aqueous extract. *LWT - Food Science and Technology*, 2015, vol. 64 (2), 1028-1035
- **PONS, M.** ; **FISZMAN, S.M**. Instrumental texture profile analysis with particular reference to gelled systems. *Journal of Texture Studies*, 1996, vol. 27 (6), 597-624
- Color changes of UHT milk during storage.. *Sensors*, 2008, vol. 8 (9), 5961-5974
- **RENARD, D** ; **VAN DE VELDE, F** ; **VISSCHERS, R.W**. The gap between food gel structure, texture and perception. *Food Hydrocolloids,*, 2006, vol. 20 (4), 423-431
- **SERRA, M.** ; **TRUJILLO, A. J.** ; **GUAMIS, B** ; **FERRAGUT, V**. Evaluation of physical properties during storage of set and stirred yogurts made from ultra-high pressure homogenization-treated milk. *Food Hydrocolloids,*, 2009, vol. 23 (1), 82-91
- **SERRA, M** ; **TRUJILLO, A.J.** ; **QUEVEDO, J.M** ; **GUAMIS, B** ; **FERRAGUT, V.** Acid coagulation properties and suitability for yogurt production of cows' milk treated by high-pressure homogenisation. *International Dairy Journal*, 2007, vol. 17 (7), 782-790
- **SETHI, S.** ; **TYAGI, S.K.** ; **ANURAG, R.K.** Plant-based milk alternatives an emerging segment of functional beverages: a review. *Journal of Food Science and Technology*, 2016, vol. 53 (9), 3408-3423
- **TABILO-MUNIZAGA, G** ; **BARBOSA-CÁNOVAS, G.V**. Rheology for the food industry. *Journal of Food Engineering*, 2005, vol. 67 (1-2), 147-156
- **TORRES, M.D.** ; **FRADINHO, P** ; **RAYMUNDO, A** ; **SOUSA, I.** Thermorheological and textural behaviour of gluten-free gels obtained from chestnut and rice flours. *Food and Bioprocess Technology*, 2014, vol. 7, 1171-1182

- **TUNICK, M.H.** Rheology of dairy foods that gel, stretch, and fracture. *Journal of Dairy Science*, 2000, vol. 83 (8), 1892-1898
- GRAS notices - potato protein isolates (No. 447). Retrieved March 31, 2020, from U.S. Food and Drug administration website. *U.S. FDA.*, 2013, https://www.accessdata.fda.gov/scripts/fdcc/index.cfm?set=GRASNotices
- **VARGAS, M** ; **CHÁFER, M.** ; **ALBORS, A.** ; **CHIRALT, A** ; **GONZÁLEZ-MARTÍNEZ, C.** Physico-chemical and sensory characteristics of yoghurt produced from mixtures of cows' and goats' milk.. *International Dairy Journal*, 2008, vol. 18 (12), 1146-1152
- Potato Proteins: functional food ingredients. **WAGLAY, A.** ; **KARBOUNE, S**. Advances in potato chemistry and technology. Academic Press, 2016, 75-104
- Effects of high pressure on food proteins. **YANG, J.** ; **POWERS, J.R.** High pressure processing of food principles, technology and applications. 2016, 353-389
- **ZANNINI, E.** ; **JESKE, S** ; **LYNCH, K.** ; **ARENDT, E. K**. Development of novel quinoa-based yoghurt fermented with dextran producer Weissella cibaria MG1. *International Journal of Food Microbiology,*, 2018, vol. 268 (2), 19-26
- **ZHANG, D** ; **MU, T** ; **SUN, H.** Calorimetric, rheological, and structural properties of potato protein and potato starch composites and gels. *Starch*, 2017, vol. 69 (7-8), 1600329